# EUROPÄISCHE PATENTSCHRIFT

(11) **EP 3 869 664 B1**
(45) Veröffentlichungstag und Bekanntmachung des Hinweises auf die Patenterteilung: **22.11.2023**
(21) Anmeldenummer: 21156944.7
(22) Anmeldetag: 12.02.2021
(51) Int. Cl.: H02J 13/00, H02J 3/14, H04B 3/54

(54) **VERFAHREN FÜR EINE KOMMUNIKATION ZWISCHEN EINEM NETZREGLER UND EINER VIELZAHL AN ELEKTRISCHEN KONTROLLVORRICHTUNGEN, NETZREGLER, KONTROLLVORRICHTUNG SOWIE SYSTEM**
METHOD FOR COMMUNICATION BETWEEN A NETWORK CONTROLLER AND A PLURALITY OF ELECTRICAL CONTROL DEVICES, NETWORK CONTROLLER, CONTROL DEVICE AND SYSTEM
PROCÉDÉ POUR UNE COMMUNICATION ENTRE UN RÉGULATEUR DE RÉSEAU ET UNE PLURALITÉ DE DISPOSITIFS ÉLECTRIQUES DE COMMANDE, RÉGULATEUR DE RÉSEAU, DISPOSITIF DE COMMANDE, AINSI QUE SYSTÈME

(30) Priorität: 14.02.2020 DE 102020103988
(43) Veröffentlichungstag der Anmeldung: 25.08.2021
(73) Patentinhaber: Mitteldeutsche Netzgesellschaft Strom mbH, 06184 Kabelsketal (DE); Technische Universität Dresden, 01069 Dresden (DE); Hochschule Mittweida, 09648 Mittweida (DE)
(72) Erfinder: Palm, Sebastian, 01187 Dresden (DE); Schnelle, Tobias, 04105 Leipzig (DE); Nitschke, Sebastian, 04720 Döbeln OT Ziegra (DE)
(74) Vertreter: Bals & Vogel Patentanwälte PartGmbB

(56) Entgegenhaltungen:
- EP-A2- 0 199 148
- WO-A1-2014/139775

## Beschreibung

Im Zuge der Dekarbonisierung des Elektroenergiesystems erfolgt ein starker Zubau von dezentralen Energieerzeugungsanlagen, beispielsweise von Photovoltaikanlagen und Windkraftanlagen. Diese dezentralen Energieerzeuger speisen vor allem in die unteren Spannungsnetze, die auch als untere Spannungsebenen verstanden werden können, d. h. den Mittelspannungsnetzen und den Niederspannungsnetzen, des Energieversorgungsnetzes ein. Hinzu kommt, dass das Elektroenergiesystem in Zukunft verstärkt durch dezentrale Verbraucher, wie Elektrofahrzeuge, belastet wird und weiter dezentrale elektrische Energiespeicher, beispielsweise zum Speichern der von Photovoltaikanlagen erzeugten Energie, das Elektroenergiesystem beeinflussen werden. Durch diese vielen dezentralen Netzteilnehmer ist eine Kommunikation mit denselben notwendig, um ein Zusammenspiel der Netzteilnehmer zu ermöglichen und das bestehende Elektroenergiesystem ohne großen Netzausbau weiter verwenden zu können.

Die Kommunikation mit den vielen dezentralen Netzteilnehmern kann derzeit über (zusätzliche) separate Kabel, wie DSL-Kabel, Glasfaserleitungen oder Koaxialkabel, erfolgen, was jedoch eine sehr kostenintensive Möglichkeit zur Kommunikation, insbesondere zur Steuerung, darstellt. Auch ist eine Kommunikation mit den vielen dezentralen Netzteilnehmern über zusätzliche Funkwellen, beispielsweise über den Mobilfunk, bekannt. Diese Kommunikation mit den dezentralen Netzteilnehmern kann jedoch sehr unzuverlässig sein. Powerline Communication (also die Kommunikation, über die Energieleitung selber bzw. direkt ohne zusätzliche Kommunikationsleitung), als eine weitere Möglichkeit zur Kommunikation mit den vielen dezentralen Netzteilnehmern, nutzt ein vorhandenes Stromnetz als Träger und moduliert ein hochfrequentes Signal auf. Nachteilig ist hier, dass das hochfrequente Signal im Stromnetz eine Dämpfung erfährt und daher im Stromnetz kostenintensive Verstärkeranlagen notwendig sind, um eine Kommunikation mit allen dezentralen Netzteilnehmern sicherzustellen.

Aus dem Artikel "Control of Modular Microgrids by Varying Grid Frequency", 2017, Tobias Schnelle et al., ist ferner eine weitere Möglichkeit zur Kommunikation mit den vielen dezentralen Netzteilnehmern genannt. Bei dieser Möglichkeit werden mit einem Stromnetz, insbesondere einem elektrischen Teilnetz, verbundene Netzteilnehmer, wie Photovoltaikanlagen und elektrische Energiespeicher, mittels der Netzfrequenz des Stromnetzes direkt gesteuert. Ein Frequenzwert entspricht dabei einem Steuersignal. Nachteilig ist hier, dass die Anzahl der Steuersignale begrenzt ist, da die Netzfrequenz, abhängig von der Regelungenauigkeit, nur auf gewisse Frequenzwerte geregelt werden kann. Daher ist bei dieser Kommunikationsmöglichkeit eine komplexe Kommunikation von mehreren Marktteilnehmern, beispielsweise mehrerer Stromanbieter, mit den vielen dezentralen Netzteilnehmern nicht möglich. Die Anzahl der zu kommunizierenden Informationsdaten ist somit stark begrenzt.

Die WO 2014/139775 A1 offenbart z. B. ein gattungsgemäßes Verfahren zum Kommunizieren innerhalb eines elektrischen Stromnetzes.

Es ist Aufgabe der Erfindung, die voranstehend beschriebenen Nachteile zumindest teilweise zu beheben. Insbesondere ist es Aufgabe der vorliegenden Erfindung, eine Kommunikation eines Netzreglers mit einer Vielzahl an elektrischen Kontrollvorrichtungen (ohne eine zusätzliche Kommunikationsleitung) zu verbessern, wobei vorzugsweise größere Informationsdaten bzw. Datenmengen übertragbar sind. Weiter ist es insbesondere Aufgabe der Erfindung, eine besonders einfache und/oder sichere und/oder besonders schnelle Kommunikation eines Netzreglers mit einer Vielzahl an elektrischen Kontrollvorrichtungen zu ermöglichen.

Die voranstehende Aufgabe wird gelöst durch ein Verfahren für eine Kommunikation zwischen einem Netzregler und einer Vielzahl an elektrischen Kontrollvorrichtungen gemäß den Merkmalen des Anspruchs 1, einem Netzregler gemäß den Merkmalen des Anspruchs 12, einer elektrischen Kontrollvorrichtung gemäß den Merkmalen des Anspruchs 17 sowie einem System gemäß den Merkmalen des Anspruchs 20. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Netzregler, der erfindungsgemäßen elektrischen Kontrollvorrichtung und dem erfindungsgemäßen System und jeweils umgekehrt, sodass bezüglich der Offenbarung zu den einzelnen Erfindungsaspekten stets wechselseitig Bezug genommen wird bzw. werden kann.

Gemäß einem ersten Aspekt zeigt die vorliegende Erfindung ein Verfahren für eine Kommunikation zwischen einem Netzregler und einer Vielzahl an elektrischen Kontrollvorrichtungen eines elektrischen Teilnetzes, insbesondere in unkritischen Netzsituationen. Der Netzregler ist dazu ausgebildet, mittels einer Frequenzregeleinheit eine Netzfrequenz des elektrischen Teilnetzes auf Frequenzwerte innerhalb eines Frequenzbandes des elektrischen Teilnetzes zu regeln. Das Verfahren zum Kommunizieren, insbesondere in unkritischen Netzsituationen, weist die folgenden Schritte auf:
a) Übersetzen von zu kommunizierenden Informationsdaten in eine Frequenzabfolge mit wenigstens zwei Frequenzwerten mittels einer Übersetzungseinheit des Netzreglers,
b) Erzeugen der Frequenzabfolge in dem elektrischen Teilnetz für die Vielzahl an elektrischen Kontrollvorrichtungen des elektrischen Teilnetzes mittels der Frequenzregeleinheit des Netzreglers,
c) Übertragen der Frequenzabfolge mittels des elektrischen Teilnetzes an die Vielzahl an elektrischen Kontrollvorrichtungen,
d) Empfangen der Frequenzabfolge von einer jeweiligen Empfangseinheit der Vielzahl an elektrischen Kontrollvorrichtungen,
e) Rückübersetzen der Frequenzabfolge in die zu kommunizierenden Informationsdaten mittels einer jeweiligen Rückübersetzungseinheit der Vielzahl an elektrischen Kontrollvorrichtungen,
f) Auswerten der zu kommunizierenden Informationsdaten mittels einer jeweiligen Auswerteeinheit der Vielzahl an elektrischen Kontrollvorrichtungen.

Die einzelnen Schritte des erfindungsgemäßen Verfahrens können, sofern technisch sinnvoll und/oder möglich, insbesondere zeitlich, nacheinander und/oder auch nebeneinander, bzw. parallel, erfolgen.

Die Kommunikation zwischen dem Netzregler und der Vielzahl an elektrischen Kontrollvorrichtungen mittels des elektrischen Teilnetzes kann eine unidirektionale Kommunikation sein. Damit ist gemeint, dass die zu kommunizierenden Informationsdaten von dem Netzregler (ausschließlich) in Richtung der Vielzahl an elektrischen Kontrollvorrichtungen über das elektrische Teilnetz gesendet werden.

Das elektrische Teilnetz kann ein Inselnetz sein, wobei insbesondere das Inselnetz kein Teil eines Verbundnetzes ist. Das Inselnetz versorgt ein räumlich enges Gebiet. Das Inselnetz kann mindestens einen elektrischen Energieerzeuger, wie bspw. eine Photovoltaikanlage, zum Versorgen des Inselnetzes mit elektrischer Energie aufweisen. Durch den Netzregler können elektrische Qualitätsmerkmale des elektrischen Teilnetzes, insbesondere des Inselnetzes, sichergestellt werden. Als elektrische Qualitätsmerkmale des elektrischen Teilnetzes, insbesondere des Inselnetzes, können die elektrische Spannung und/oder die elektrische Stromstärke und/oder die Netzfrequenz des elektrischen Teilnetzes verstanden werden. Das elektrische Teilnetz kann auch ein Teil eines elektrischen Gesamtnetzes sein. Ein Gesamtnetz kann ein Verbundnetz sein. Ein Netzregler mit einer Entkoppeleinheit kann insbesondere die elektrischen Qualitätsmerkmale des elektrischen Teilnetzes von elektrischen Qualitätsmerkmalen des elektrischen Gesamtnetzes entkoppeln. Das elektrische Gesamtnetz kann mehrere elektrische Teilnetze aufweisen, wobei jedes der elektrischen Teilnetze zumindest einen Netzregler umfassen kann. Jeder der Netzregler kann die elektrischen Qualitätsmerkmale des jeweiligen elektrischen Teilnetzes sicherstellen.

Das elektrische Teilnetz weist elektrische Leitungen zur Energieübertragung auf. Die elektrischen Leitungen können den Netzkoppler mit der Vielzahl an elektrischen Kontrollvorrichtungen verbinden und dem elektrischen Energietransport dienen. Die elektrischen Leitungen können auch den Netzkoppler mit elektrischen Verbrauchern, elektrischen Energieerzeugern und/oder elektrischen Speichern elektrisch verbinden, insbesondere galvanisch verbinden. Vorteilhafterweise ist die Netzfrequenz an jedem Punkt in dem elektrischen Teilnetz gleich. Somit kann das Kommunizieren zwischen dem Netzregler und der Vielzahl an elektrischen Kontrollvorrichtungen besonders einfach erfolgen und besonders sicher sein.

Als Netzfrequenz (f(t)) kann die Frequenz der elektrischen Spannung (u(t)) in dem elektrischen Teilnetz verstanden werden. Das Frequenzband kann als Frequenzbereich, insbesondere als ein kontinuierlicher Frequenzbereich, verstanden werden. Insbesondere kann das Frequenzband ein nach (DIN) EN 50160 zulässiges Frequenzband, d. h. 49,0 Hz bis 51,0 Hz, umfassen. Die Frequenzregeleinheit kann insbesondere derart ausgebildet sein, dass diese die Netzfrequenz des elektrischen Teilnetzes auf gleichmäßig voneinander beabstandete Frequenzwerte, insbesondere im Wesentlichen gleichmäßig voneinander beabstandete Frequenzwerte, regeln kann. Beispielsweise können die Frequenzwerte in einem Frequenzschritt von 10 mHz jeweils voneinander beabstandet sein. Vorzugsweise sind die Frequenzwerte in einem Frequenzschritt von 50 mHz oder im Wesentlichen in einem Frequenzschritt von 50 mHz jeweils voneinander beabstandet. Der Frequenzschritt von 50 mHz oder im Wesentlichen 50 mHz zwischen benachbarten Frequenzwerten kann besonders vorteilhaft sein. Es ist auch denkbar, dass die Frequenzregeleinheit insbesondere derart ausgebildet ist, dass diese die Netzfrequenz des elektrischen Teilnetzes auf Frequenzwerte mit gleichmäßig voneinander beabstandete Periodendauern, insbesondere im Wesentlichen gleichmäßig voneinander beabstandete Periodendauern, regeln kann. Beispielsweise können die Periodendauern dieser Frequenzwerte in einem Periodenschritt von 2 µs jeweils voneinander beabstandet sein. So z. B. kann die Periodendauer eines ersten Frequenzwertes 20,000 ms sein und die Periodendauer eines zu dem ersten Frequenzwert benachbarten zweiten Frequenzwerts 20,002 ms sein.

In Schritt a) des erfindungsgemäßen Verfahrens findet die Übersetzung der zu kommunizierenden Informationsdaten in eine Frequenzabfolge statt. Die zu kommunizierenden Informationsdaten können ein Steuersignal und/oder eine Information für die Vielzahl an elektrischen Kontrollvorrichtungen sein. Beispielsweise können zu kommunizierende Informationsdaten Informationen einzelner Marktakteure für die Vielzahl der elektrischen Kontrollvorrichtungen, aktuelle Marktpreise und/oder Fahrpläne für elektrische Verbraucher, elektrische Energieerzeuger und/oder elektrische Speicher sein. Weiter können sich die zu kommunizierenden Informationsdaten an alle elektrischen Kontrollvorrichtungen des elektrischen Teilnetzes oder nur an bestimmte Kontrollvorrichtungen aus der Vielzahl an elektrischen Kontrollvorrichtungen des elektrischen Teilnetzes richten. Richten sich die zu kommunizierenden Informationsdaten nur an bestimmte Kontrollvorrichtungen aus der Vielzahl an elektrischen Kontrollvorrichtungen des elektrischen Teilnetzes, so kann die Frequenzabfolge ein Adresselement zum Adressieren der bestimmten Kontrollvorrichtungen aufweisen.

Im Artikel "Control of Modular Microgrids by Varying Grid Frequency", 2017, Tobias Schnelle et al., entsprechen nachteiligerweise erste zu kommunizierende Informationsdaten einem ersten Frequenzwert und zweite zu kommunizierende Informationsdaten einem zweiten Frequenzwert. Die ersten zu kommunizierenden Informationsdaten können beispielsweise sein, dass die elektrischen Kontrollvorrichtungen des Teilnetzes die Einspeiseleistung der mit der jeweiligen elektrischen Kontrollvorrichtung verbundenen Photovoltaikanlage auf 80% reduzieren sollen.

Mit dem erfindungsgemäßen Verfahren können zu kommunizierende Informationsdaten, insbesondere solche zu kommunizierenden Informationsdaten, in eine Frequenzabfolge mit wenigstens zwei Frequenzwerten, wobei insbesondere die Frequenzwerte unterschiedlich sind, übersetzt werden. Die Frequenzabfolge kann vorteilhafterweise mindestens zwei Frequenzabfolgestellen aufweisen, wobei jede der Frequenzabfolgestellen einen der wenigstens zwei Frequenzwerte aufweist. Als Frequenzabfolgestelle kann eine Stelle der Frequenzabfolge verstanden werden, welche insbesondere ein Informationselement durch einen Frequenzwert darstellt, wobei insbesondere die zu kommunizierenden Informationsdaten durch einzelne Informationselemente gebildet werden. Beispielsweise können die ersten zu kommunizierenden Informationsdaten in eine Frequenzabfolge mit vier Frequenzabfolgestellen übersetzt werden, wobei jede der vier Frequenzabfolgestellen einen der zwei Frequenzwerte aufweist. So kann die erste Frequenzabfolgestelle den ersten Frequenzwert, die zweite Frequenzabfolgestelle den zweiten Frequenzwert, die dritte Frequenzabfolgestelle den ersten Frequenzwert und die vierte Frequenzabfolgestelle den ersten Frequenzwert aufweisen. Vorteilhafterweise können somit mit dem erfindungsgemäßen Verfahren in diesem Beispiel durch die wenigstens zwei Frequenzwerte 16 zu kommunizierende Informationsdaten von dem Netzregler an die Vielzahl an elektrischen Kontrollvorrichtungen gesendet werden. Somit kann auf besonders einfache Weise die Kommunikation des Netzreglers mit der Vielzahl an elektrischen Kontrollvorrichtungen verbessert werden, insbesondere kann die Anzahl an zu kommunizierenden Informationsdaten besonders groß sein. Weiter kann die Anzahl an zu kommunizierenden Informationsdaten von der Anzahl der Frequenzwerte, die die Frequenzabfolge aufweist, abhängen. Weist in dem obigen Beispiel jede der vier Frequenzabfolgestellen jeweils einen von vier unterschiedlichen Frequenzwerten auf, so können 4×4x4×4 = 256 zu kommunizierende Informationsdaten von dem Netzregler an die Vielzahl an elektrischen Kontrollvorrichtungen gesendet werden. Vorzugsweise umfasst die Frequenzabfolge vier Frequenzabfolgestellen, wobei jede der vier Frequenzabfolgestellen jeweils einen von 16 unterschiedlichen Frequenzwerten aufweist.

Das Übersetzen der zu kommunizierenden Informationsdaten in die Frequenzabfolge mit den wenigstens zwei Frequenzwerten mittels der Übersetzungseinheit des Netzreglers kann mithilfe einer in der Übersetzungseinheit hinterlegten Übersetzungstabelle erfolgen. Mithilfe der Übersetzungstabelle können die zu kommunizierenden Informationsdaten in die Frequenzabfolge besonders einfach übersetzt werden. Beispielsweise können die zu kommunizierenden Informationsdaten eine Abfolge von vier Informationselementen, z. B. "7", "1", "F" und "A", umfassen, wobei mittels der Übersetzungseinheit die Abfolge an den Informationselementen in die Frequenzabfolge 50,10 Hz, 50,04 Hz, 50,18 Hz und 50,13 Hz übersetzt wird. Das bedeutet, dass die Übersetzungseinheit jeweils einem Informationselement einen Frequenzwert zuordnen kann. Somit kann auf besonders einfache Weise die Kommunikation eines Netzreglers mit einer Vielzahl an elektrischen Kontrollvorrichtungen verbessert werden, insbesondere kann eine komplexe Kommunikation stattfinden. Mit anderen Worten kann mit dem erfindungsgemäßen Verfahren die Anzahl an zu kommunizierenden Informationsdaten erhöht werden.

In Schritt b) des erfindungsgemäßen Verfahrens wird die Frequenzabfolge in dem elektrischen Teilnetz für die Vielzahl an elektrischen Kontrollvorrichtungen des elektrischen Teilnetzes mittels der Frequenzregeleinheit des Netzreglers erzeugt. Damit ist gemeint, dass die Frequenzregeleinheit die Netzfrequenz des elektrischen Teilnetzes nacheinander auf die Frequenzwerte der Frequenzabfolge regelt. Mit Bezug auf das im vorherigen Absatz genannte Beispiel regelt die Frequenzregeleinheit die Netzfrequenz des elektrischen Teilnetzes zuerst auf 50,10 Hz, anschließend auf 50,04 Hz, anschließend auf 50,18 Hz und zum Schluss auf 50,13 Hz. Somit können die zu kommunizierenden Informationsdaten in Form einer Frequenzabfolge in dem elektrischen Teilnetz erzeugt werden. Insbesondere kann die Frequenzregeleinheit dazu ausgebildet sein, sprunghaft auf die Frequenzwerte der Frequenzabfolge zu regeln. Mit sprunghaft kann gemeint sein, dass die Frequenzregeleinheit derart von einem Frequenzwert auf einen anderen Frequenzwert regeln kann, dass dazwischen liegende Frequenzwerte möglichst ausgelassen werden. In anderen Worten kann die Frequenzregeleinheit besonders schnell die Netzfrequenz des elektrischen Teilnetzes von einem Frequenzwert auf einen anderen Frequenzwert regeln. Vorteilhafterweise kann somit sichergestellt werden, dass die Frequenzabfolge korrekt in dem elektrischen Teilnetz erzeugt werden kann. Außerdem kann der Netzregler eine Schnittstelle zum Empfangen der aktuellen Netzfrequenz des elektrischen Teilnetzes von einer Netzfrequenzmesseinheit aufweisen. Der Netzregler kann auch selbst die Netzfrequenzmesseinheit aufweisen.

Das Übertragen der Frequenzabfolge erfolgt mittels des elektrischen Teilnetzes, insbesondere mittels der elektrischen Leitungen des elektrischen Teilnetzes, an die Vielzahl an elektrischen Kontrollvorrichtungen in Schritt c) des erfindungsgemäßen Verfahrens. Vorteilhafterweise kann das Übertragen der Frequenzabfolge mittels des elektrischen Teilnetzes ungedämpft und besonders schnell erfolgen. Weiter hat das Übertragen mittels des elektrischen Teilnetzes den Vorteil, dass die zu kommunizierenden Informationsdaten an jedem Punkt im elektrischen Teilnetz empfangen werden können. Separate Kommunikationsleitungen für die Kommunikation mit einer elektrischen Kontrollvorrichtung, wie bspw. eine separate Glasfaserleitung, können somit für neue, weitere elektrische Kontrollvorrichtungen entfallen. Folglich kann mit dem erfindungsgemäßen Verfahren eine besonders einfache Kommunikation des Netzreglers mit der Vielzahl an elektrischen Kontrollvorrichtungen ermöglicht werden. Dadurch, dass die zu kommunizierenden Informationsdaten mittels dem elektrischen Teilnetz kommuniziert werden, wobei das elektrische Teilnetz insbesondere auch gleichzeitig der Energieübertragung und damit der Energieversorgung bspw. von den elektrischen Kontrollvorrichtungen dient, kann mit dem erfindungsgemäßen Verfahren eine besonders sichere, insbesondere ausfallsichere, Kommunikation des Netzreglers mit der Vielzahl an elektrischen Kontrollvorrichtungen ermöglicht werden. Weiter sind somit vorteilhafterhafterweise (zusätzliche) separate Übertragungsmedien, wie bspw. eine Glasfaserleitung oder ein Mobilfunknetz, nur bedingt notwendig, insbesondere nicht notwendig, da erfindungsgemäß die Kommunikation der zu kommunizierenden Informationsdaten zwischen dem Netzregler und der Vielzahl an elektrischen Kontrollvorrichtungen über das elektrische Teilnetz erfolgt. Zusätzliche separate Übertragungsmedien könnten für eine bidirektionale Kommunikation des Netzreglers mit der Vielzahl an elektrischen Kontrollvorrichtungen eingesetzt werden, sodass Kontrollvorrichtungsdaten von der Vielzahl an elektrischen Kontrollvorrichtungen vom Netzregler empfangen werden können.

In Schritt d) des erfindungsgemäßen Verfahrens wird die mittels des elektrischen Teilnetzes übertragene Frequenzabfolge von der jeweiligen Empfangseinheit der Vielzahl an elektrischen Kontrollvorrichtungen empfangen. Damit gemeint ist, dass jede der elektrischen Kontrollvorrichtungen zumindest eine Empfangseinheit aufweisen kann. Vorteilhafterweise umfasst wenigstens eine elektrische Kontrollvorrichtung der Vielzahl an elektrischen Kontrollvorrichtungen zumindest zwei Empfangseinheiten, wobei vorzugsweise jede der Empfangseinheiten separat die Frequenzabfolge empfängt. Bei einem Ausfall einer ersten Empfangseinheit der zumindest zwei Empfangseinheiten kann somit weiterhin die Frequenzabfolge von der zweiten Empfangseinheit empfangen werden. Ferner können die separat empfangenden Frequenzabfolgen miteinander verglichen werden und die Gefahr eines Empfangsfehlers verringert werden. Folglich kann eine besonders sichere Kommunikation des Netzreglers mit der Kontrollvorrichtung erfolgen.

In Schritt e) des erfindungsgemäßen Verfahrens wird die Frequenzabfolge in die zu kommunizierenden Informationsdaten rückübersetzt. Die vorher in dem Beispiel genannten in dem elektrischen Teilnetz erzeugte Frequenzabfolge 50,10 Hz, 50,04 Hz, 50,18 Hz und 50,13 Hz kann somit mittels der Rückübersetzungseinheit in die zu kommunizierenden Informationsdaten, insbesondere in die Abfolge der Informationselemente "7", "1", "F" und "A", zurückübersetzt werden. Ferner kann das Rückübersetzen der zu kommunizierenden Informationsdaten in die Frequenzabfolge mit den wenigstens zwei Frequenzwerten mittels der Übersetzungseinheit des Netzreglers mithilfe einer in der Rückübersetzungseinheit hinterlegten Rückübersetzungstabelle erfolgen. Mithilfe der Rückübersetzungstabelle kann die Frequenzabfolge in die zu kommunizierenden Informationsdaten besonders einfach rückübersetzt werden. Vorzugsweise weist jede der elektrischen Kontrollvorrichtungen jeweils zumindest eine Rückübersetzungseinheit auf. Insbesondere umfasst wenigstens eine der elektrischen Kontrollvorrichtungen zumindest zwei Rückübersetzungseinheiten, wobei vorzugsweise jede der zumindest zwei Rückübersetzungseinheiten separat die Frequenzabfolge in die zu kommunizierenden Informationsdaten rückübersetzt. Bei einem Ausfall einer ersten Rückübersetzungseinheit der zumindest zwei Rückübersetzungseinheiten kann somit weiterhin die Frequenzabfolge von der zweiten der zumindest zwei Rückübersetzungseinheiten in die zu kommunizierenden Informationsdaten rückübersetzt werden. Ferner können die rückübersetzten zu kommunizierenden Informationsdaten miteinander verglichen werden und die Gefahr eines Rückübersetzungsfehlers verringert werden. Folglich kann eine besonders sichere Kommunikation des Netzreglers mit der Kontrollvorrichtung erfolgen. Weiter ist denkbar, dass das Rückübersetzen der Frequenzabfolge in die zu kommunizierenden Informationsdaten mithilfe einer in der Rückübersetzungseinheit hinterlegten Rückübersetzungstabelle erfolgt.

In Schritt f) des erfindungsgemäßen Verfahrens erfolgt das Auswerten der zu kommunizierenden Informationsdaten. Vorzugsweise weist jede der elektrischen Kontrollvorrichtungen zumindest eine Auswerteeinheit auf. Insbesondere umfasst wenigstens eine der elektrischen Kontrollvorrichtungen zumindest zwei Auswerteeinheiten, wobei vorzugsweise jede der zumindest zwei Auswerteeinheiten separat die zu kommunizierenden Informationsdaten auswertet. Bei einem Ausfall einer ersten Auswerteeinheit der zumindest zwei Auswerteeinheiten können somit weiterhin die zu kommunizierenden Informationsdaten durch die zweite Auswerteeinheit ausgewertet werden. Somit kann besonders vorteilhaft sichergestellt werden, dass ein mit der wenigstens einen elektrischen Kontrollvorrichtung verbundener elektrischer Netzteilnehmer auf Basis der ausgewerteten Informationsdaten mittels einer jeweiligen Regel-/Steuereinheit der wenigstens einen elektrischen Kontrollvorrichtung geregelt und/oder gesteuert werden kann.

Insbesondere sind die Schritte a) bis g) des erfindungsgemäßen Verfahrens für die Kommunikation zwischen dem Netzregler und der Vielzahl an elektrischen Kontrollvorrichtungen des elektrischen Teilnetzes in unkritischen Netzsituationen geeignet. Das erfindungsgemäße Verfahren kann als einen weiteren Schritt, insbesondere als einen Schritt vor Schritt a), das Erkennen einer Netzsituation des elektrischen Teilnetzes, insbesondere das Erkennen einer unkritischen Netzsituation und/oder einer kritischen Netzsituation des elektrischen Teilnetzes, aufweisen. Der Netzregler kann eine Netzsituationserkennungseinheit zum Erkennen einer Netzsituation des elektrischen Teilnetzes aufweisen. Als unkritische Netzsituation kann eine Netzsituation des elektrischen Teilnetzes verstanden werden, in welchem die Stabilität des elektrischen Teilnetzes nicht gefährdet ist. Die Stabilität des elektrischen Teilnetzes kann gefährdet sein, wenn die elektrische Spannung einen technisch zulässigen Wert und/oder die elektrische Stromstärke einen technisch zulässigen Wert, insbesondere einen technisch zulässigen Wert aus der (DIN) EN 50160, überschreitet und/oder unterschreitet.

Beim Erkennen einer kritischen Netzsituation kann der Netzregler die Netzfrequenz des elektrischen Teilnetzes direkt auf einen Frequenzwert eines Direktsteuerbandbereiches regeln. Das Frequenzband kann ferner hierfür zumindest einen Direktsteuerbandbereich aufweisen. Dem Frequenzwert in dem Direktsteuerbandbereich kann direkt ein Steuersignal (zu kommunizierende Informationsdaten, wie bspw. "Wirkleistung elektrischer Lasten auf 50%") zugeordnet sein. Somit kann der Vielzahl an elektrischen Kontrollvorrichtungen in einer kritischen Netzsituation direkt mittels des elektrischen Teilnetzes ein Steuersignal besonders schnell kommuniziert werden. Mit anderen Worten werden in einer kritischen Netzsituation, insbesondere durch eine Netzsituationserkennungseinheit des Netzreglers, zu kommunizierende Informationsdaten, anstatt in die Frequenzabfolge mit wenigstens zwei Frequenzwerten (vgl. Schritt a)), in einen einzelnen Frequenzwert übersetzt. Insbesondere können die restlichen Schritte b) bis g) analog dazu ausgeführt werden. Somit kann ein Netzbetreiber in kritischen Netzsituationen zu kommunizierende Informationsdaten besonders einfach der Vielzahl an elektrischen Kontrollvorrichtungen vorgeben, um das Netz stabil betreiben zu können. Insbesondere liegen bereits nach einer Vollwelle die zu kommunizierenden Daten der Vielzahl an elektrischen Kontrollvorrichtungen vorliegen. Somit kann in kritischen Netzsituationen das Regeln und/oder Steuern des mit der jeweiligen elektrischen Kontrollvorrichtung verbundenen elektrischen Netzteilnehmers auf Basis der ausgewerteten Informationsdaten mittels einer jeweiligen Regel-/Steuereinheit der jeweiligen elektrischen Kontrollvorrichtung besonders schnell erfolgen.

Es kann von Vorteil sein, wenn ein erfindungsgemäßes Verfahren weiter folgenden Schritt g) aufweist:
Regeln und/oder Steuern eines mit der jeweiligen elektrischen Kontrollvorrichtung verbundenen elektrischen Netzteilnehmers auf Basis der ausgewerteten Informationsdaten mittels einer jeweiligen Regel-/Steuereinheit der jeweiligen elektrischen Kontrollvorrichtung, wobei insbesondere der elektrische Netzteilnehmer ein elektrischer Verbraucher, ein elektrischer Energieerzeuger und/oder ein elektrischer Speicher ist. Jeder Netzteilnehmer kann mit einer elektrischen Kontrollvorrichtung verbunden sein. Es ist auch denkbar, dass mehrere Netzteilnehmer mit einer elektrischen Kontrollvorrichtung verbunden sind. Ist eine elektrische Kontrollvorrichtung mit mehreren Netzteilnehmern verbunden, so kann die elektrische Kontrollvorrichtung für jeden dieser Netzteilnehmer eine Regel-/Steuereinheit aufweisen. Ferner kann die jeweilige Regel-/Steuereinheit einen Speicher zum Abspeichern der ausgewerteten Informationsdaten aufweisen. Somit können beispielsweise Fahrpläne für einen elektrischen Speicher für einen Folgetag abgespeichert werden. Folglich können mit dem erfindungsgemäßen Verfahren auf besonders einfache Weise zu kommunizierende Informationsdaten an die Vielzahl an elektrischen Kontrollvorrichtungen und damit insbesondere an die elektrischen Netzteilnehmer übermittelt werden.

Vorteilhafterweise kann bei einem erfindungsgemäßen Verfahren die Frequenzabfolge ein Startelement zum Kennzeichnen des Anfangs der Frequenzabfolge aufweisen und/oder die Frequenzabfolge ein Endelement zum Kennzeichnen des Endes der Frequenzabfolge aufweisen und/oder die Frequenzabfolge ein Adresselement zum Adressieren von wenigstens einer elektrischen Kontrollvorrichtung von der Vielzahl an elektrischen Kontrollvorrichtungen aufweisen. Das Startelement und/oder das Endelement und/oder das Adresselement können vorzugsweise jeweils zumindest einen Frequenzwert aufweisen, welche in einem Datenbandbereich liegt.

Mit dem Startelement kann auf besonders einfache Weise der Vielzahl an elektrischen Kontrollvorrichtungen der Beginn der Frequenzabfolge signalisiert werden. Insbesondere kann mit dem Startelement auf besonders einfache Weise der Vielzahl an elektrischen Kontrollvorrichtungen der Beginn eines Inhalts der zu kommunizierenden Informationsdaten signalisiert werden. Mit dem Startelement ist eine besonders sichere Kommunikation, insbesondere eine fehlerarme Kommunikation, des Netzreglers mit der Vielzahl an elektrischen Kontrollvorrichtungen möglich. Das Startelement kann ein Frequenzwert, insbesondere ein bestimmter Frequenzwert, des Frequenzbandes sein, bspw. 50,01 Hz. Das Startelement kann auch eine Startfrequenzabfolge mit wenigstens zwei Frequenzwerten, insbesondere eine bestimmte Startfrequenzabfolge, bspw. 50,01 Hz gefolgt von 49,99 Hz, sein. Die Frequenzwerte nach dem Startelement können den Inhalt der zu kommunizierenden Informationsdaten enthalten, bspw. einen Fahrplan für einen elektrischen Energiespeicher oder die Information, dass die Einspeiseleistung einer mit einer elektrischen Kontrollvorrichtung verbundenen Photovoltaikanlage auf 80% reduziert werden soll.

Mit dem Endelement kann auf besonders einfache Weise das Ende der Frequenzabfolge der Vielzahl an elektrischen Kontrollvorrichtung signalisiert werden. Somit ist eine besonders sichere Kommunikation, insbesondere eine fehlerarme Kommunikation, des Netzreglers mit der Vielzahl an elektrischen Kontrollvorrichtungen möglich. Das Endelement kann ein Frequenzwert, insbesondere ein bestimmter Frequenzwert, des Frequenzbandes sein, bspw. 50,20 Hz. Das Endelement kann auch eine Endfrequenzabfolge mit wenigstens zwei Frequenzwerten, insbesondere eine bestimmte Endfrequenzabfolge, bspw. 50,20 Hz gefolgt von 49,80 Hz, sein. Mit dem Endelement kann auf besonders einfache Weise der Vielzahl an elektrischen Kontrollvorrichtungen das Ende der zu kommunizierenden Informationsdaten mitgeteilt werden. Vorzugsweise kann die Frequenzabfolge das Startelement und das Endelement aufweisen, wobei zwischen dem Startelement und dem Endelement der Inhalt der zu kommunizierenden Informationsdaten, bspw. ein Fahrplan für einen elektrischen Energiespeicher, enthalten ist.

Mit dem Adresselement kann auf besonders einfache Weise zumindest eine elektrische Kontrollvorrichtung der Vielzahl an elektrischen Kontrollvorrichtungen adressiert werden. Dies kann notwendig sein, wenn sich zu kommunizierende Informationsdaten nur an bestimmte Kontrollvorrichtungen aus der Vielzahl an elektrischen Kontrollvorrichtungen des elektrischen Teilnetzes richten sollen. Das Adresselement kann ein Frequenzwert des Frequenzbandes sein. Das Adresselement ist vorzugsweise eine Adressfrequenzabfolge mit wenigstens zwei Frequenzwerten. Weiter kann die Frequenzabfolge das Adresselement zwischen dem Startelement und dem Endelement aufweisen. Insbesondere kann die Frequenzabfolge das Adresselement direkt nach dem Startelement aufweisen. Somit kann eine besonders effiziente Kommunikation des Netzreglers mit der Vielzahl an elektrischen Kontrollvorrichtungen, insbesondere mit bestimmten Kontrollvorrichtungen der Vielzahl an elektrischen Kontrollvorrichtungen, erfolgen.

Mit besonderem Vorteil kann bei einem erfindungsgemäßen Verfahren die Frequenzabfolge wenigstens ein Sicherheitsstörelement zum Berücksichtigen unbeabsichtigter Netzfrequenzschwankungen und/oder einer Regelungenauigkeit der Frequenzregeleinheit aufweisen. Das Sicherheitsstörelement kann vorzugsweise zumindest einen Frequenzwert aufweisen, welcher in einem Datenbandbereich liegt. Das Sicherheitsstörelement kann ein Frequenzwert, insbesondere ein bestimmter Frequenzwert, des Frequenzbandes sein, bspw. 50,02 Hz. Dieser Frequenzwert kann benachbart zu einem Frequenzwert, bspw. 50,01 Hz, eines Startelements sein. Dieser Frequenzwert, bspw. 50,19 Hz, kann auch benachbart zu einem Frequenzwert, bspw. 50,20 Hz, eines Endelements sein. Somit kann mit dem wenigstens einen Sicherheitsstörelement besonders einfach eine besonders fehlerarme Kommunikation zwischen dem Netzregler und der Vielzahl an elektrischen Kontrollvorrichtungen sichergestellt werden. Das Sicherheitsstörelement kann auch eine Sicherheitsstörfrequenzabfolge mit wenigstens zwei Frequenzwerten sein. Die wenigstens zwei Frequenzwerte der Sicherheitsstörabfolge können vorzugsweise benachbarte Frequenzwerte sein. Vorzugsweise kann das Sicherheitsstörelement keine Information tragen.

Nach einer weiteren bevorzugten Ausführungsform kann bei einem erfindungsgemäßen Verfahren zumindest einer der Frequenzwerte der Frequenzabfolge wenigstens eine Vollwelle lang, bevorzugterweise zwei Vollwellen lang und ganz bevorzugterweise vier Vollwellen lang in dem elektrischen Teilnetz für die Vielzahl an elektrischen Kontrollvorrichtungen erzeugt werden. Somit kann eine sichere Kommunikation, insbesondere eine fehlerarme Kommunikation, zwischen dem Netzregler und der Vielzahl an elektrischen Kontrollvorrichtungen sichergestellt werden. In dem elektrischen Teilnetz kann die elektrische Spannung eine sinusförmige elektrische Spannung sein, insbesondere mit einer Netznennfrequenz von 50 Hz. Eine einzelne Sinuskurve dieser sinusförmigen Spannung kann als eine Vollwelle verstanden werden, wobei insbesondere eine einzelne Sinuskurve drei aufeinanderfolgende Nulldurchgänge aufweisen kann. Beispielsweise kann jeder Frequenzwert der Frequenzabfolge 50,10 Hz, 50,04 Hz, 50,18 Hz und 50,13 Hz jeweils vier Vollwellen in dem elektrischen Teilnetz erzeugt werden. Damit ist gemeint, dass vier Vollwellen mit 50,10 Hz, gefolgt von vier Vollwellen mit 50,04 Hz, gefolgt von vier Vollwellen mit 50,18 Hz und gefolgt von vier Vollwellen mit 50,13 Hz in dem elektrischen Teilnetz erzeugt werden. Die erste Vollwelle eines Frequenzwertes kann zum Anfahren des neuen Frequenzwertes dienen. Mit den weiteren Vollwellen eines Frequenzwertes kann besonders einfach gewährleistet werden, dass die zu kommunizierenden Informationsdaten besonders fehlerarm von dem Netzregler zu der Vielzahl an elektrischen Kontrollvorrichtungen kommuniziert werden.

Es kann von Vorteil sein, wenn bei einem erfindungsgemäßen Verfahren das Frequenzband des elektrischen Teilnetzes wenigstens einen Datenbandbereich für die Kommunikation der zu kommunizierenden Informationsdaten umfasst, wobei die Frequenzabfolge, insbesondere die wenigstens zwei Frequenzwerte der Frequenzabfolge, in dem wenigstens einen Datenbandbereich des Frequenzbandes liegt/liegen. Insbesondere können auch ein Startelement und/oder ein Endelement und/oder ein Adresselement und/oder ein Sicherheitsstörelement in dem Datenbandbereich liegen. Der Datenbandbereich kann ein Teil eines zulässigen Frequenzbandes von 45,00 Hz bis 55,00 Hz sein, vorzugsweise von 48,00 Hz bis 52,00 Hz, und insbesondere ein Teil des nach (DIN) EN 50160 zulässigen Frequenzbandes von 49,00 Hz bis 51,00 Hz. Beispielsweise kann der Datenbandbereich von 49,80 Hz bis 50,20 Hz sein. Der Datenbandbereich kann in gleichmäßig voneinander beabstandete Frequenzwerte unterteilt werden. Beispielsweise können die Frequenzwerte in einem Frequenzschritt von 10 mHz voneinander beabstandet sein, d. h. der Datenbandbereich kann in die Frequenzwerte 49,80 Hz, 49,81 Hz, 49,82 Hz -...- 50,18 Hz, 50,19 Hz und 50,20 Hz unterteilt sein. Es ist ferner insbesondere denkbar, dass die Frequenzwerte in einem Frequenzschritt von 50 mHz voneinander beabstandet sind. Es ist insbesondere auch denkbar, dass der Datenbandbereich in Frequenzwerte mit gleichmäßig voneinander beabstandete Periodendauern, insbesondere im Wesentlichen gleichmäßig voneinander beabstandete Periodendauern, unterteilt ist. Beispielsweise können die Periodendauern dieser Frequenzwerte in einem Periodenschritt von 2 µs jeweils voneinander beabstandet sein, d. h. der Datenbandbereich kann in die Frequenzwerte (zugehörige Periodendauern) 49,800 Hz (20,080 ms), 49,811 Hz (20,076 ms), 49,821 Hz (20,072 ms) -...- 50,00 Hz (20,000 ms) -...- 50,181 Hz (19,928 ms), 50,191 Hz (19,924 ms) und 50,201 Hz (19,920 ms) unterteilt sein. Die Frequenzregeleinheit kann insbesondere dazu ausgebildet sein, die Netzfrequenz des elektrischen Teilnetzes auf diese Frequenzwerte bzw. auf die zu den Periodendauern zugehörigen Frequenzwerte zu regeln. Mit einem solchen Datenbandbereich kann auf besonders einfache Weise die Kommunikation des Netzreglers mit der Vielzahl an elektrischen Kontrollvorrichtungen verbessert werden, insbesondere kann die Anzahl an zu kommunizierenden Informationsdaten besonders groß sein.

Vorteilhafterweise kann bei einem erfindungsgemäßen Verfahren das Frequenzband des elektrischen Teilnetzes einen ersten Datenbandbereich, einen zweiten Datenbandbereich und/oder wenigstens einen Totbandbereich umfassen, wobei in dem ersten Datenbandbereich und/oder in dem zweiten Datenbandbereich die Frequenzabfolge liegt, und wobei insbesondere der wenigstens eine Totbandbereich zwischen dem ersten Datenbandbereich und dem zweiten Datenbandbereich liegt. Der Totbandbereich kann ein Teil eines zulässigen Frequenzbandes sein und insbesondere die Netznennfrequenz umfassen. Beispielsweise kann der Totbandbereich von 49,99 Hz bis 50,01 Hz sein. Der Totbandbereich kann auch in gleichmäßig voneinander beabstandete Frequenzwerte unterteilt werden. Die Frequenzregeleinheit kann insbesondere dazu ausgebildet sein, die Netzfrequenz des elektrischen Teilnetzes auf die Frequenzwerte des Totbandbereichs zu regeln. Der Totbandbereich kann einen Bereich des Frequenzbandes darstellen, mit welchem unbeabsichtigte Frequenzschwankungen berücksichtigt werden können. Somit kann vorteilhafterweise verhindert werden, dass diese unbeabsichtigten Frequenzschwankungen zu einer Ansteuerung von elektrischen Netzteilnehmern führen. Weiter kann der Totbandbandbereich einen Bereich des Frequenzbandes mit Frequenzwerten darstellen, mit welchen die Netzzeit des elektrischen Teilnetzes korrigiert werden kann. Somit kann vorteilhafterweise die Netzzeit an die tatsächliche Zeit angepasst werden, insbesondere ohne bspw. elektrische Netzteilnehmer anzusteuern. Ferner können der erste Datenbandbereich und/oder der zweite Datenbandbereich gleich groß und insbesondere symmetrisch zu der Netznennfrequenz ausgebildet sein. Bspw. kann der erste Datenbandbereich die Frequenzwerte von 49,80 Hz bis 49,98 Hz und der zweite Datenbandbereich die Frequenzwerte von 50,02 Hz bis 50,20 Hz umfassen, wobei insbesondere die Frequenzwerte von 49,99 Hz bis 50,01 Hz den Totbandbereich bilden. Es ist insbesondere auch denkbar, dass der erste Datenbandbereich die Frequenzwerte von 49,80 Hz bis 49,90 Hz und der zweite Datenbandbereich die Frequenzwerte von 50,10 Hz bis 50,20 Hz umfassen, wobei insbesondere die Frequenzwerte von 49,95 Hz bis 50,05 Hz den Totbandbereich bilden.

Bei dem erfindungsgemäßen Verfahren werden die zu kommunizierenden Informationsdaten zusätzlich in wenigstens zwei zu den wenigstens zwei Frequenzwerten korrespondierende Gegenfrequenzwerte übersetzt, wobei die Frequenzabfolge die wenigstens zwei korrespondierenden Gegenfrequenzwerte aufweist. Durch das Regeln der Netzfrequenz auf die Frequenzwerte der Frequenzabfolge kann resultieren, dass die Netzzeit, die üblicherweise frequenzabhängig ist, des elektrischen Teilnetzes von der tatsächlichen Uhrzeit abweicht. Mit dem Übersetzen der zu kommunizierenden Informationsdaten in die wenigstens zwei zu den wenigstens zwei Frequenzwerten korrespondierende Gegenfrequenzwerte kann besonders einfach sichergestellt werden, dass die Netzzeit durch die Kommunikation des Netzreglers mit der Vielzahl an elektrischen Kontrollvorrichtungen nicht verändert wird, insbesondere im Wesentlichen nicht verändert wird. Damit ist gemeint, dass die Netzzeit direkt vor der Kommunikation und direkt nach der Kommunikation gleich ist, insbesondere im Wesentlichen gleich ist. Ist beispielsweise die Netznennfrequenz des elektrischen Teilnetzes 50 Hz, so werden die einzelnen Frequenzwerte der beispielhaften Frequenzabfolge 50,10 Hz, 50,04 Hz, 50,18 Hz und 50,13 Hz zusätzlich in die jeweils korrespondierenden Gegenfrequenzwerte 49,90 Hz, 49,96 Hz, 49,82 Hz und 49, 87 Hz übersetzt. Summiert man den Frequenzwert 50,10 Hz und den Gegenfrequenzwert 49,90 Hz, so ist der Mittelwert der Summe die Netznennfrequenz von 50,00 Hz.

Vorteilhafterweise ist auch denkbar, dass die einzelnen Frequenzwerte mit ihren jeweiligen Periodendauern in jeweils korrespondierende Frequenzwerte mit korrespondierenden Gegenperiodendauern übersetzt werden. Bspw. kann der Frequenzwert 49,800 Hz mit der Periodendauer 20,080 ms in den korrespondierenden Frequenzwert 50,201 Hz mit der Gegenperiodendauer 19,920 ms übersetzt werden. Summiert man die Periodendauer 20,080 ms und die Gegenperiodendauer 19,920 ms, so ist der Mittelwert der Summe die Netznennfrequenzperiodendauer von 20,000 ms. Somit kann die Veränderung der Netzzeit durch die Kommunikation des Netzreglers mit der Vielzahl an elektrischen Kontrollvorrichtungen besonders geringgehalten werden, insbesondere verhindert werden. Insbesondere kann ein Zeitfehler, der durch das Regeln der Netzfrequenz auf gleichmäßig voneinander beabstandete Frequenzwerte auftreten kann, auf einfache Weise verringert, insbesondere vermieden.

Somit liegt vorzugsweise ein Frequenzwert und ein zu dem Frequenzwert korrespondierender Gegenfrequenzwert, der vorzugsweise direkt nach dem Frequenzwert folgt, symmetrisch zu der Netznennfrequenz, insbesondere im Wesentlichen symmetrisch zu der Netznennfrequenz. Vorteilhafterweise liegen weiter ein Frequenzwert der Frequenzabfolge und der zu dem Frequenzwert korrespondierende Gegenfrequenzwert benachbart zueinander in der Frequenzabfolge. Somit kann bei einem Übergang von dem einen Frequenzwert zu dem symmetrisch zu der Netznennfrequenz, in der Frequenzabfolge benachbart liegenden, korrespondierenden Gegenfrequenzwert aufgrund des Frequenzsprunges ein störungsfesteres Rückübersetzen der Frequenzabfolge in die zu kommunizierenden Informationsdaten möglich sein. Der Frequenzsprung ist insbesondere ein Frequenzabstand zwischen dem Frequenzwert und dem zu dem Frequenzwert korrespondierenden Gegenfrequenzwert. Bezogen auf das genannte Beispiel bedeutet das, dass die zu kommunizierenden Informationsdaten vorteilhafterweise in die Frequenzabfolge 49,90 Hz und 50,10 Hz; 49,96 Hz und 50,04 Hz; 49,82 Hz und 50,18 Hz; 49,87 Hz und 50,13 Hz übersetzt werden. Wie bereits erwähnt worden ist, kann bei dem erfindungsgemäßen Verfahren zumindest einer der Frequenzwerte der Frequenzabfolge wenigstens eine ("1") Vollwelle lang, bevorzugterweise zwei Vollwellen lang und ganz bevorzugterweise vier Vollwellen lang in dem elektrischen Teilnetz für die Vielzahl an elektrischen Kontrollvorrichtungen erzeugt werden, d. H. der jeweilige Frequenzwert wird zumindest 1 Vollwelle, bevorzugterweise 2 Vollwellen lang und ganz bevorzugterweise 4 Vollwellen (zur verbesserten Erkennbarkeit) erzeugt werden, bevor der Gegenfrequenzwert, vorzugsweise symmetrisch zum Frequenzwert mit der gleichen Anzahl an Vollwerten, erzeugt wird.

Nach einer weiteren bevorzugten Ausführungsform kann bei einem erfindungsgemäßen Verfahren die Frequenzabfolge ein zu dem Startelement korrespondierendes Gegenstartelement aufweisen und/oder ein zu dem Endelement korrespondierendes Gegenendelement aufweisen und/oder ein zu dem Adresselement korrespondierendes Gegenadresselement aufweisen und/oder ein zu dem wenigstens einen Sicherheitsstörelement korrespondierendes Gegensicherheitsstörelement aufweisen. Wie bereits im vorherigen Absatz beschrieben, kann damit besonders einfach sichergestellt werden, dass die Netzzeit durch die Kommunikation des Netzreglers mit der Vielzahl an elektrischen Kontrollvorrichtungen nicht verändert wird, insbesondere im Wesentlichen nicht verändert wird.

Die Frequenzregeleinheit ist insbesondere derart ausgebildet, dass diese die Netzfrequenz (f(t)) des elektrischen Teilnetzes auf gleichmäßig voneinander beabstandete Frequenzwerte, insbesondere im Wesentlichen gleichmäßig voneinander beabstandete Frequenzwerte, regelt, wobei vorzugsweise die Frequenzwerte in einem Frequenzschritt von 50 mHz oder im Wesentlichen in einem Frequenzschritt von 50 mHz jeweils voneinander beabstandet sind. Der Frequenzschritt von 50 mHz oder im Wesentlichen 50 mHz zwischen benachbarten Frequenzwerten ist besonders vorteilhaft für eine Kommunikation zwischen einem Netzregler und einer Vielzahl an elektrischen Kontrollvorrichtungen, da Störungen, welche bspw. zu Netzfrequenzschwankungen führen, einen besonders geringen Einfluss auf die Kommunikation haben können. Ferner kann bei dem Frequenzschritt von 50 mHz oder im Wesentlichen 50 mHz bei einem Übergang von einem Frequenzwert zu einem symmetrisch zu der Netznennfrequenz, in der Frequenzabfolge benachbart liegenden, korrespondierenden Gegenfrequenzwert aufgrund eines Frequenzsprunges ein besonders störungsfesteres Rückübersetzen der Frequenzabfolge in die zu kommunizierenden Informationsdaten möglich sein.

Nach einer weiteren bevorzugten Ausführungsform werden bei einem erfindungsgemäßen Verfahren die zu kommunizierenden Informationsdaten insbesondere in eine Frequenzabfolge mit (genau) zwei Frequenzwerten, wobei insbesondere die beiden Frequenzwerte unterschiedlich sind, mittels der Übersetzungseinheit des Netzreglers übersetzt. Mit anderen Worten werden die zu kommunizierenden Informationsdaten insbesondere in eine binäre Frequenzabfolge mittels der Übersetzungseinheit des Netzreglers übersetzt. Ferner werden vorzugsweise die zu kommunizierenden Daten zusätzlich in (genau) zwei zu den (genau) zwei Frequenzwerten korrespondierende Gegenfrequenzwerte übersetzt, wobei insbesondere die Frequenzabfolge die wenigstens zwei korrespondierenden Gegenfrequenzwerte aufweist. Außerdem kann insbesondere durch eine zeitliche Reihenfolge eines Frequenzwertes und eines zu dem Frequenzwert korrespondierenden Gegenfrequenzwertes einer elektrischen Kontrollvorrichtung eine zusätzliche Information kommuniziert werden, wobei vorzugsweise der Frequenzwert der Frequenzabfolge und der zu dem Frequenzwert korrespondierende Gegenfrequenzwert benachbart zueinander in der Frequenzabfolge liegen. Mit anderen Worten kann insbesondere einer elektrischen Kontrollvorrichtung zusätzlich eine Information anhand dessen kommuniziert werden, ob zeitlich zuerst der Frequenzwert und zeitlich danach der korrespondierende Gegenfrequenzwert oder ob zeitlich zuerst der korrespondierende Gegenfrequenzwert und zeitlich danach der Frequenzwert von der Empfangseinheit der elektrischen Kontrollvorrichtung empfangen wird.

Mit dem Übersetzen der zu kommunizierenden Informationsdaten in die korrespondierenden Gegenfrequenzwerte kann besonderes einfach die Integrität der zu kommunizierenden Informationsdaten, insbesondere der empfangenen, zu kommunizierenden Informationsdaten, überprüft werden. Das Überprüfen der Integrität der zu kommunizierenden Informationsdaten, insbesondere der empfangenen, zu kommunizierenden Informationsdaten, kann bspw. mittels einer jeweiligen Überprüfungseinheit der Vielzahl an elektrischen Kontrollvorrichtungen erfolgen. Die Überprüfungseinheit kann insbesondere die zu kommunizierenden Informationsdaten der rückübersetzten Frequenzabfolge mit den wenigstens zwei Frequenzwerten mit den zu kommunizierenden Informationsdaten der rückübersetzten Frequenzabfolge mit den wenigstens zwei Gegenfrequenzwerten zum Überprüfen der Integrität vergleichen. Außerdem liegen vorzugsweise die beiden Frequenzwerte und die zu den beiden Frequenzwerten korrespondierenden zwei Gegenfrequenzwerte symmetrisch zu der Netznennfrequenz, insbesondere im Wesentlichen symmetrisch zu der Netznennfrequenz.

Nach einer weiteren bevorzugten Ausführungsform können bei einem erfindungsgemäßen Verfahren die wenigstens zwei Frequenzwerte der Frequenzabfolge jeweils eine bestimmte Zeitdauer oder im Wesentlichen eine bestimmte Zeitdauer in dem elektrischen Teilnetz für die Vielzahl an elektrischen Kontrollvorrichtungen erzeugt werden, wobei insbesondere die bestimmten Zeitdauern, mit welchen die wenigstens zwei Frequenzwerte der Frequenzabfolge in dem elektrischen Teilnetz jeweils erzeugt werden, gleich sind. Somit kann das Erzeugen der Frequenzabfolge in dem elektrischen Teilnetz für die Vielzahl an elektrischen Kontrollvorrichtungen des elektrischen Teilnetzes mittels der Frequenzregeleinheit des Netzreglers sowie das Empfangen der Frequenzabfolge von der jeweiligen Empfangseinheit der Vielzahl an elektrischen Kontrollvorrichtungen und/oder das Rückübersetzen der Frequenzabfolge in die zu kommunizierenden Informationsdaten mittels einer jeweiligen Rückübersetzungseinheit der Vielzahl an elektrischen Kontrollvorrichtungen durch einen besonders einfachen Algorithmus implementiert werden. Die bestimmte Zeitdauer ist insbesondere eine festlegbare bzw. festgelegte Zeitdauer. Die bestimmte Zeitdauer ist insbesondere mindestens 50 ms, vorzugsweise mindestens 100 ms, ganz vorzugsweise mindestens 200 ms. Insbesondere ist die bestimmte Zeitdauer eine Zeitdauer zwischen 50 ms und 1000 ms, vorzugsweise eine Zeitdauer zwischen 100 ms und 700 ms, ganz vorzugsweise eine Zeitdauer zwischen 200 ms und 500 ms. Insbesondere werden alle Frequenzwerte der Frequenzabfolge jeweils eine bestimmte Zeitdauer oder jeweils im Wesentlichen eine Zeitdauer, d. h. eine bestimmte Zeit lang, in dem elektrischen Teilnetz für die Vielzahl an elektrischen Kontrollvorrichtungen erzeugt, wobei insbesondere die bestimmten Zeitdauern, mit welchen die Frequenzwerte der Frequenzabfolge in dem elektrischen Teilnetz jeweils erzeugt werden, gleich sind. Beispielsweise wird jeder Frequenzwert einer Frequenzabfolge mit den Frequenzwerten 49,90 Hz, 50,10 Hz, 49,90 Hz, 50,10 Hz ... 49,85 Hz und 50,15 Hz die bestimmte Zeitdauer in dem elektrischen Teilnetz erzeugt. Ein Sendetakt kann somit insbesondere konstant sein.

Mit besonderem Vorteil kann bei einem erfindungsgemäßen Verfahren die Frequenzabfolge in dem elektrischen Teilnetz mittels der Frequenzregeleinheit des Netzreglers zumindest zeitweise derart erzeugt werden, dass ein jeweiliger Übergang zwischen Frequenzwerten in der Frequenzabfolge derart erfolgt, dass ein Phasenwinkel mit dem Übergang ein ganzzahliges Vielfaches eines Vollwinkels oder im Wesentlichen ein ganzzahliges Vielfaches eines Vollwinkels, vorzugsweise, dass ein Phasenwinkel genau einen Vollwinkel oder im Wesentlichen genau einen Vollwinkel, erfährt. Somit kann vorteilhafterweise eine Beeinflussung der Netzzeit des elektrischen Teilnetzes geringgehalten werden. Der jeweilige Übergang zwischen Frequenzwerten in der Frequenzabfolge ist insbesondere als eine Frequenzänderung von einem Frequenzwert zu einem (direkt) folgenden Frequenzwert, d. h. benachbarten Frequenzwerten, in der Frequenzabfolge zu verstehen, wobei die Frequenzänderung insbesondere innerhalb einer Übergangzeit erfolgt. Der Phasenwinkel ist insbesondere der Phasenwinkel der elektrischen Spannung (u(t)) in dem elektrischen Teilnetz. Als ein Vollwinkel ist insbesondere 2 (mal) π zu verstehen. Außerdem ist vorzugsweise während eines jeweiligen Übergangs zwischen Frequenzwerten in der Frequenzabfolge die jeweilige Frequenzänderungsgeschwindigkeit konstant. Somit können Störauswirkungen aufgrund der Frequenzänderung von einem ersten Frequenzwert auf einen folgenden Frequenzwert geringgehalten werden. Bei einer konstanten Frequenzänderungsgeschwindigkeit ist hier insbesondere der Betrag abhängig von der Übergangszeit.

Nach einer weiteren bevorzugten Ausführungsform kann bei einem erfindungsgemäßen Verfahren die Frequenzabfolge in dem elektrischen Teilnetz mittels der Frequenzregeleinheit des Netzreglers zumindest zeitweise derart erzeugt werden, dass ein jeweiliger Übergang zwischen Frequenzwerten in der Frequenzabfolge mit einer für die Übergänge gleichen Frequenzänderungsgeschwindigkeit oder mit einer für die Übergänge im Wesentlichen gleichen Frequenzänderungsgeschwindigkeit erfolgt. Mit anderen Worten können die Übergänge zwischen Frequenzwerten in der Frequenzabfolge mit einer konstanten Frequenzänderungsgeschwindigkeit gleichen Betrags realisiert werden. Somit sind vorteilhafterweise Störauswirkungen aufgrund eines konstanten Störspektrums konstant bzw. im Wesentlichen konstant. Die Übergangszeit zwischen Frequenzwerten ist hierbei insbesondere abhängig vom Betrag der Frequenzänderung von einem Frequenzwert zu einem (direkt) folgenden Frequenzwert. Vorteilhafterweise können Übergänge in einer Frequenzabfolge mit einer gleichen Frequenzänderungsgeschwindigkeit oder mit einer im Wesentlichen gleichen Frequenzänderungsgeschwindigkeit besonders einfach in der Frequenzregeleinheit des Netzreglers durch einen Algorithmus implementiert werden.

Gemäß einem zweiten Aspekt zeigt die vorliegende Erfindung einen Netzregler für ein erfindungsgemäßes Verfahren, wobei das Verfahren für eine Kommunikation zwischen einem Netzregler und einer Vielzahl an elektrischen Kontrollvorrichtungen eines elektrischen Teilnetzes ist, und wobei der Netzregler umfasst:
- eine Übersetzungseinheit zum Übersetzen von zu kommunizierenden Informationsdaten in eine Frequenzabfolge mit wenigstens zwei Frequenzwerten,
- eine Frequenzregeleinheit zum Regeln einer Netzfrequenz eines elektrischen Teilnetzes auf Frequenzwerte innerhalb eines Frequenzbandes des elektrischen Teilnetzes.

Es kann von Vorteil sein, wenn ein erfindungsgemäßer Netzregler eine Entkoppeleinheit zum Entkoppeln elektrischer Qualitätsmerkmale des elektrischen Teilnetzes von elektrischen Qualitätsmerkmalen eines elektrischen Gesamtnetzes aufweist, wobei das elektrische Gesamtnetz das elektrische Teilnetz umfasst. Somit kann zumindest die Netzfrequenz des elektrischen Teilnetzes von der Netzfrequenz des elektrischen Gesamtnetzes entkoppelt werden und die Kommunikation zwischen dem Netzregler und der Vielzahl an elektrischen Kontrollvorrichtungen des elektrischen Teilnetzes besonders einfach ermöglicht werden. Insbesondere kann der Netzregler ein Power electronic grid interconnector (leistungselektronischer Netzkoppler) sein, insbesondere mit der Übersetzungseinheit und der Frequenzregeleinheit.

Vorteilhafterweise kann ein erfindungsgemäßer Netzregler eine Informationsdatenempfangsschnittstelle zum Empfangen von den zu kommunizierenden Informationsdaten aufweisen. Vorteilhafterweise können mit der Informationsdatenempfangsschnittstelle die zu kommunizierenden Informationsdaten eines Netzbetreibers oder einzelner Marktakteure für die Vielzahl der elektrischen Kontrollvorrichtungen, wie aktuelle Marktpreise und/oder Fahrpläne für elektrische Verbraucher, elektrische Energieerzeuger und/oder elektrische Speicher, empfangen werden.

Mit besonderem Vorteil kann ein erfindungsgemäßer Netzregler ferner eine Kontrollvorrichtungsdatenempfangsschnittstelle zum Empfangen von Kontrollvorrichtungsdaten von der Vielzahl an elektrischen Kontrollvorrichtungen des elektrischen Teilnetzes aufweisen. Somit können auch Kontrollvorrichtungsdaten von der Vielzahl an elektrischen Kontrollvorrichtungen vom Netzregler empfangen werden. Mit anderen Worten ist eine bidirektionale Kommunikation des Netzreglers mit der Vielzahl an elektrischen Kontrollvorrichtungen möglich. Das elektrische Teilnetz kann zwischen dem Netzregler und der jeweiligen elektrischen Kontrollvorrichtung der Vielzahl an elektrischen Kontrollvorrichtungen jeweils zumindest ein zusätzliches Übertragungsmedium aufweisen. Das Übertragungsmedium zum Übertragen der Kontrollvorrichtungsdaten kann beispielsweise ein DSL-Kabel sein und/oder die Kontrollvorrichtungsdaten können per Funkwellen übertragen werden. Somit können Information, wie z. B. geplante Verfügbarkeiten der elektrischen Netzteilnehmer, eine tatsächlich erbrachte Wirkleistungsänderung einer Photovoltaikanlage, von der jeweiligen elektrischen Kontrollvorrichtung an den Netzregler gesendet werden. Folglich kann eine besonders vorteilhafte Kommunikation zwischen dem Netzregler und der Vielzahl an elektrischen Kontrollvorrichtungen erfolgen. Insbesondere kann wenigstens zwischen der Vielzahl an Kontrollvorrichtungen des zumindest einen elektrischen Teilnetzes und dem zumindest einen Netzregler des zumindest einen elektrischen Teilnetzes eine Netzbetreibereinheit angeordnet sein. Die Netzbetreibereinheit kann vorteilhafterweise die Kontrollvorrichtungsdaten, bspw. geplante Fahrpläne, Anlagenverfügbarkeiten, Flexibilitäten bzw. Nichtverfügbarkeiten und Abrechnungsdaten, empfangen, verarbeiten und die verarbeiteten Kontrollvorrichtungsdaten, insbesondere als zu kommunizierende Informationsdaten, an den zumindest einen Netzregler des zumindest einen elektrischen Teilnetzes senden kann. Somit kann die Netzbetreibereinheit bspw. drohende Netzengpässe (kritische Netzsituationen) des elektrischen Teilnetzes bzw. des elektrischen Gesamtnetzes ermitteln. Insbesondere kann die Netzbetreibereinheit mit den Kontrollvorrichtungsdaten eine Netzzustandsanalyse des elektrischen Teilnetzes, insbesondere eines elektrischen Gesamtnetzes, durchführen und daraus zu kommunizierende Informationsdaten für den zumindest einen Netzregler und somit insbesondere für die Vielzahl an elektrischen Kontrollvorrichtungen generieren. Vorteilhafterweise kann mit der Netzbetreibereinheit insbesondere ein für das elektrische Gesamtnetz optimaler Betrieb ermöglicht werden.

Nach einer weiteren bevorzugten Ausführungsform kann ein erfindungsgemäßer Netzregler ferner eine Kontrollvorrichtungsdatenauswerteeinheit zum Auswerten von empfangenen Kontrollvorrichtungsdaten, insbesondere der empfangenen Kontrollvorrichtungsdaten, aufweisen.

Der Netzregler gemäß dem zweiten Aspekt der Erfindung weist damit dieselben Vorteile auf, wie sie bereits zu dem Verfahren gemäß dem ersten Aspekt der Erfindung beschrieben worden sind.

Gemäß einem dritten Aspekt zeigt die vorliegende Erfindung eine elektrische Kontrollvorrichtung für ein erfindungsgemäßes Verfahren, wobei das Verfahren für eine Kommunikation zwischen einem Netzregler und einer Vielzahl an elektrischen Kontrollvorrichtungen eines elektrischen Teilnetzes ist, und wobei die elektrische Kontrollvorrichtung umfasst:
- eine Empfangseinheit zum Empfangen einer Frequenzabfolge,
- eine Rückübersetzungseinheit zum Rückübersetzen der Frequenzabfolge in zu kommunizierende Informationsdaten,
- eine Auswerteeinheit zum Auswerten der zu kommunizierenden Informationsdaten.

Es kann von Vorteil sein, wenn eine erfindungsgemäße elektrische Kontrollvorrichtung eine Regel-/Steuereinheit zum Regeln und/oder Steuern eines mit der elektrischen Kontrollvorrichtung verbundenen elektrischen Netzteilnehmers auf Basis der ausgewerteten Informationsdaten aufweist.

Vorteilhafterweise kann eine erfindungsgemäße elektrische Kontrollvorrichtung eine Sendeschnittstelle zum Senden von Kontrollvorrichtungsdaten, insbesondere über wenigstens ein Übertragungsmedium, aufweisen. Das Übertragungsmedium zum Übertragen der Kontrollvorrichtungsdaten kann beispielsweise ein Kabel, insbesondere ein DSL-Kabel und/oder ein Koaxialkabel, sein und/oder die Kontrollvorrichtungsdaten können per Funkwellen übertragen werden.

Die elektrische Kontrollvorrichtung gemäß dem dritten Aspekt der Erfindung weist damit dieselben Vorteile auf, wie sie bereits zu dem Verfahren gemäß dem ersten Aspekt der Erfindung bzw. dem Netzregler gemäß dem zweiten Aspekt der Erfindung beschrieben worden sind.

Gemäß einem vierten Aspekt zeigt die vorliegende Erfindung ein System, wobei das System aufweist:
- ein elektrisches Teilnetz zum Übertragen einer Frequenzabfolge,
- zumindest einen erfindungsgemäßen Netzregler, wobei der Netzregler über das elektrische Teilnetz mit zumindest einer erfindungsgemäßen elektrischen Kontrollvorrichtung verbunden ist,
- die zumindest eine erfindungsgemäße elektrische Kontrollvorrichtung.

Das System gemäß dem vierten Aspekt der Erfindung weist damit dieselben Vorteile auf, wie sie bereits zu dem Verfahren gemäß dem ersten Aspekt der Erfindung bzw. dem Netzregler gemäß dem zweiten Aspekt der Erfindung bzw. der elektrischen Kontrollvorrichtung gemäß dem dritten Aspekt der Erfindung beschrieben worden sind.

Weitere, die Erfindung verbessernde Maßnahmen ergeben sich aus der nachfolgenden Beschreibung zu einigen Ausführungsbeispielen der Erfindung, welche in den Figuren schematisch dargestellt sind. Sämtliche aus den Ansprüchen, der Beschreibung oder den Zeichnungen hervorgehende Merkmale und/oder Vorteile, einschließlich konstruktiver Einzelheiten, räumliche Anordnungen und Verfahrensschritte, können sowohl für sich als auch in den verschiedenen Kombinationen erfindungswesentlich sein. Dabei ist zu beachten, dass die Figuren nur beschreibenden Charakter haben und nicht dazu gedacht sind, die Erfindung in irgendeiner Form einzuschränken.

Es zeigen schematisch:
Fig. 1 eine Ausführungsform eines erfindungsgemäßen Verfahrens,
Fig. 2 eine Ausführungsform eines erfindungsgemäßen Netzreglers,
Fig. 3 eine Ausführungsform einer erfindungsgemäßen elektrischen Kontrollvorrichtung,
Fig. 4 eine Ausführungsform eines erfindungsgemäßen Systems,
Fig. 5 ein Frequenzband,
Fig. 6 eine Frequenzabfolge,
Fig. 7 eine Übersetzungstabelle bzw. Rückübersetzungstabelle,
Fig. 8 eine weitere Übersetzungstabelle bzw. Rückübersetzungstabelle,
Fig. 9 bis 11 schematische Abbildungen von Frequenzabfolgen mit der jeweiligen dazu korrespondierenden (Netz)-Spannungsfunktion u(t) und Netzfrequenzfunktion f(t).

In den nachfolgenden Figuren werden für die gleichen technischen Merkmale auch von unterschiedlichen Ausführungsbeispielen identische Bezugszeichen verwendet.

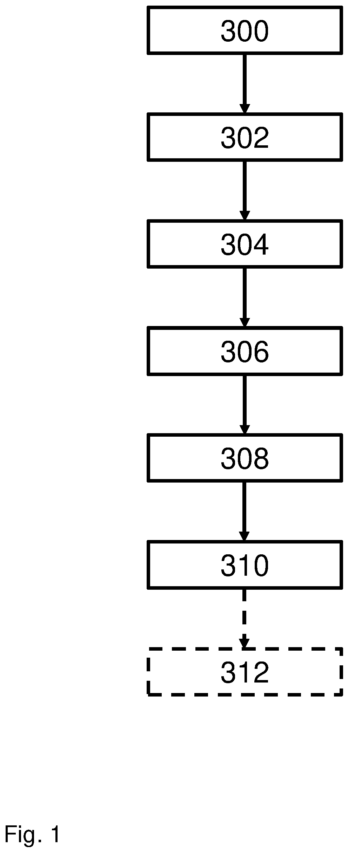

Figur 1 zeigt eine Ausführungsform eines erfindungsgemäßen Verfahrens für eine Kommunikation zwischen einem Netzregler 10 und einer Vielzahl an elektrischen Kontrollvorrichtungen 20. Zu kommunizierende Daten werden dabei von dem Netzregler 10 zu der Vielzahl an elektrischen Kontrollvorrichtungen 20 über das elektrische Teilnetz 100 gesendet. In einem ersten Schritt werden in dem erfindungsgemäßen Verfahren dafür zu kommunizierende Informationsdaten in eine Frequenzabfolge mit wenigstens zwei Frequenzwerten übersetzt 300. Diese Frequenzabfolge wird in dem elektrischen Teilnetz erzeugt 302. Das Erzeugen 302 kann mittels einer Frequenzregeleinheit 12 des Netzreglers 10 erfolgen. Die Frequenzabfolge wird über das elektrische Teilnetz 100 an die Vielzahl an elektrischen Kontrollvorrichtungen 20 übertragen 304. Die übertragene Frequenzabfolge wird von einer jeweiligen Empfangseinheit 22 der Vielzahl an elektrischen Kontrollvorrichtungen 20 empfangen 306. Die empfangene Frequenzabfolge wird anschließend in die zu kommunizierenden Informationsdaten rückübersetzt 308. Das Rückübersetzen 308 kann mittels einer jeweiligen Rückübersetzungseinheit 24 der Vielzahl an elektrischen Kontrollvorrichtungen 20 erfolgen. Die zu kommunizierenden Informationsdaten werden darauf ausgewertet 310. Das Auswerten 310 kann mittels einer jeweiligen Auswerteeinheit 26 der Vielzahl an elektrischen Kontrollvorrichtungen 20 geschehen. In einem optionalen Schritt kann auf Basis der ausgewerteten Informationsdaten ein mit der jeweiligen Kontrollvorrichtung 20 verbundener elektrischer Netzteilnehmer 102 geregelt und/oder gesteuert werden 312. Insbesondere können Schritte des erfindungsgemäßen Verfahrens zumindest teilweise parallel erfolgen. Beispielsweise kann während des Übersetzens 300 der zu kommunizierenden Informationsdaten in die Frequenzabfolge bereits ein Teil der Frequenzabfolge in dem elektrischen Teilnetz 100 erzeugt werden 302, Übertragen 304, Empfangen 306, und/oder Rückübersetzt 308 werden. Somit kann eine besonders schnelle Kommunikation zwischen dem Netzregler 10 und der Vielzahl an elektrischen Kontrollvorrichtungen 20 möglich sein.

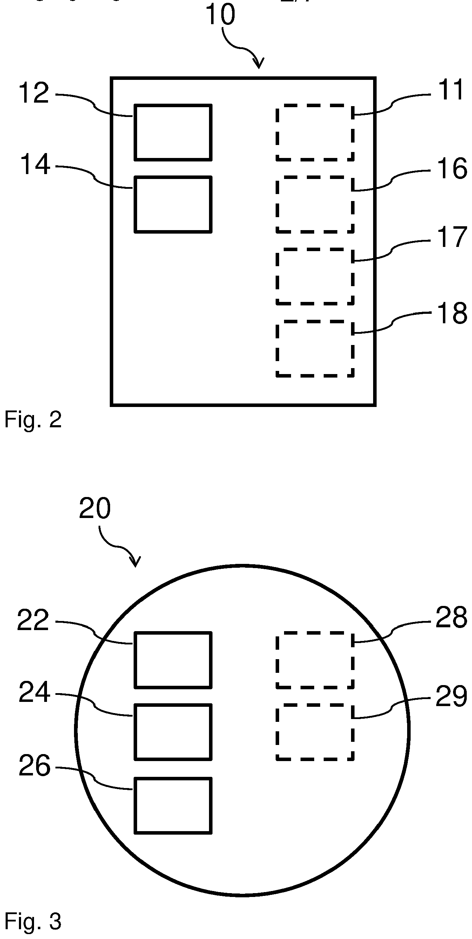

Figur 2 zeigt eine Ausführungsform eines erfindungsgemäßen Netzreglers 10. Der Netzregler 10 umfasst eine Übersetzungseinheit 14 zum Übersetzen 300 von zu kommunizierenden Informationsdaten in eine Frequenzabfolge mit wenigstens zwei Frequenzwerten und eine Frequenzregeleinheit 12 zum Regeln einer Netzfrequenz eines elektrischen Teilnetzes 100 auf Frequenzwerte innerhalb eines Frequenzbandes 50 des elektrischen Teilnetzes 100. Insbesondere wird mit der Frequenzregeleinheit 12 die Frequenzabfolge erzeugt 302. Optional kann der Netzregler 10 weiter eine Entkoppeleinheit 11 zum Entkoppeln elektrischer Qualitätsmerkmale des elektrischen Teilnetzes 100 von elektrischen Qualitätsmerkmalen eines elektrischen Gesamtnetzes, eine Informationsdatenempfangsschnittstelle 16 zum Empfangen von den zu kommunizierenden Informationsdaten, eine Kontrollvorrichtungsdatenempfangsschnittstelle 17 zum Empfangen von Kontrollvorrichtungsdaten von der Vielzahl an elektrischen Kontrollvorrichtungen 20 des elektrischen Teilnetzes 100 und eine Kontrollvorrichtungsdatenauswerteeinheit 18 zum Auswerten der empfangenen Kontrollvorrichtungsdaten aufweisen.

Figur 3 zeigt eine Ausführungsform einer erfindungsgemäßen elektrischen Kontrollvorrichtung 20. Die elektrische Kontrollvorrichtung 20 umfasst eine Empfangseinheit 22 zum Empfangen 306 einer Frequenzabfolge, eine Rückübersetzungseinheit 24 zum Rückübersetzen 308 der Frequenzabfolge in zu kommunizierende Informationsdaten und eine Auswerteeinheit 26 zum Auswerten 310 der zu kommunizierenden Informationsdaten. Optional kann die elektrische Kontrollvorrichtung 20 eine Regel-/Steuereinheit 28 zum Regeln und/oder Steuern 312 eines mit der elektrischen Kontrollvorrichtung 20 verbundenen elektrischen Netzteilnehmers 102 und eine Sendeschnittstelle 29 zum Senden von Kontrollvorrichtungsdaten aufweisen.

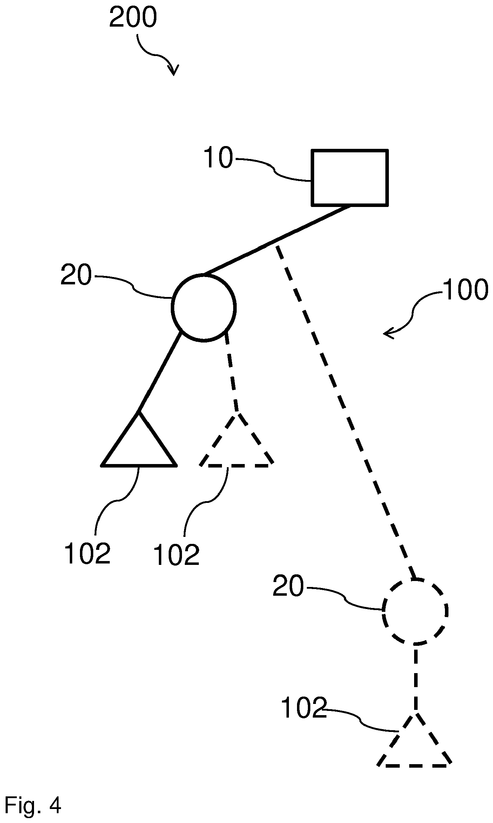

Figur 4 zeigt eine Ausführungsform eines erfindungsgemäßen Systems 200. Das System 200 zeigt einen Netzregler 10, der mittels einem elektrischen Teilnetz 100 mit einer elektrischen Kontrollvorrichtung 20 und einen elektrischen Netzteilnehmer 102 elektrisch verbunden ist. Die Kommunikation zwischen dem Netzregler 10 und der elektrischen Kontrollvorrichtung 20 bzw. dem elektrischen Netzteilnehmer 102, erfolgt mittels des elektrischen Teilnetzes 100, wobei die zu kommunizierenden Informationsdaten ausgehend von dem Netzregler 10 über das elektrische Teilnetz 100 an die elektrische Kontrollvorrichtung 20, bzw. den elektrischen Netzteilnehmer 102, gesendet werden. Wie in Figur 4 ferner dargestellt, kann diese Kontrollvorrichtung 20 mit einem weiteren elektrischen Netzteilnehmer 102 (gestrichelt) verbunden sein, wobei diese Kontrollvorrichtung 20 diese beiden Netzteilnehmer 102 auf Basis von ausgewerteten zu kommunizierenden Informationsdaten regelt und/oder steuert 312. In Figur 4 ist außerdem eine weitere elektrische Kontrollvorrichtung 20 (gestrichelt) mit einem elektrischen Netzteilnehmer 102 (gestrichelt) illustriert, wobei die weitere elektrische Kontrollvorrichtung 20 und der Netzteilnehmer 102 ebenfalls mit dem elektrischen Teilnetz 100 elektrisch verbunden sind. Vorteilhafterweise kann mit dem erfindungsgemäßen Verfahren, insbesondere in einer unkritischen Netzsituation des elektrischen Teilnetzes 100, eine Vielzahl an zu kommunizierenden Informationsdaten an die elektrische Kontrollvorrichtung 20 und/oder die weitere elektrische Kontrollvorrichtung 20 gesendet werden. Eine Kommunikation von mehreren Marktteilnehmern, beispielsweise mehrerer Stromanbieter, mit einer Vielzahl an elektrischen Kontrollvorrichtungen 20, insbesondere bestimmten elektrischen Kontrollvorrichtungen 20 der Vielzahl an elektrischen Kontrollvorrichtungen 20, ist mit dem erfindungsgemäßen Verfahren besonders einfach möglich.

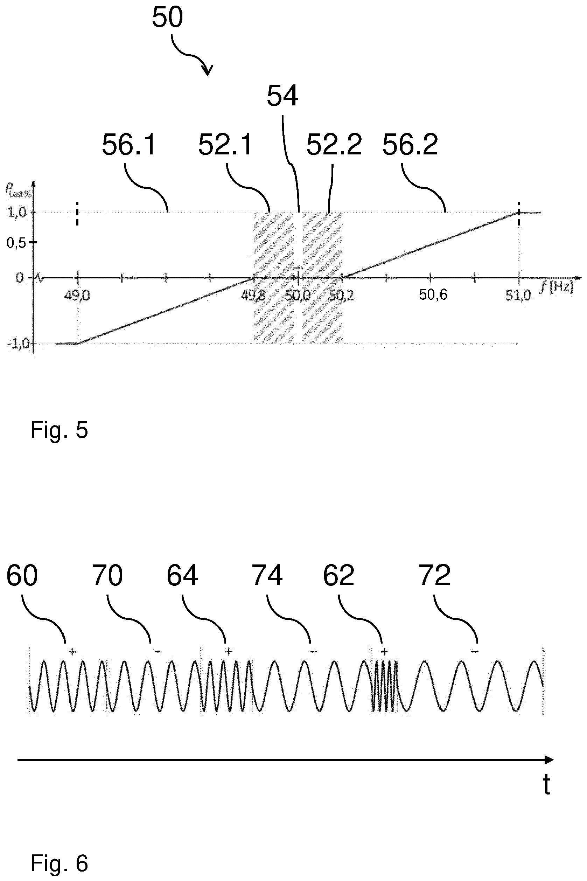

Figur 5 zeigt beispielhaft ein Frequenzband 50, wobei das Frequenzband 50 ein nach (DIN) EN 50160 zulässiges Frequenzband, d. h. 49,0 Hz bis 51,0 Hz, umfasst. In dem zulässigen Frequenzband liegen ein erster Datenbandbereich 52.1, welcher die Frequenzwerte von 49,80 Hz bis 49,98 Hz aufweist, und ein zweiter Datenbandbereich 52.2, welcher die Frequenzwerte von 50,02 Hz bis 50,20 Hz aufweist. Weiter liegt zwischen dem ersten Datenbandbereich 52.1 und dem zweiten Datenbandbereich 52.2 ein Totbandbereich 54, welcher die Frequenzwerte von 49,99 Hz bis 50,01 Hz und insbesondere die Netznennfrequenz von 50 Hz aufweist. Beispielsweise können die Frequenzwerte in dem ersten Datenbandbereich 52.1 und/oder in dem zweiten Datenbandbereich 52.2 und/oder in dem Totbandbereich 54 in einem Frequenzschritt von 10 mHz jeweils voneinander beabstandet sein. Ein Netzregler 10 kann mittels einer Frequenzregeleinheit 12 zumindest auf diese Frequenzwerte regeln. Zu kommunizierende Daten können nun mittels einer Übersetzungseinheit 14 des Netzregler 10 in eine Frequenzabfolge mit wenigstens zwei Frequenzwerten übersetzt 300 werden, wobei die wenigstens zwei Frequenzwerte in dem ersten Datenbandbereich 52.1 und/oder in dem zweiten Datenbandbereich 52.2 liegen. In Abhängig von der Anzahl der Frequenzabfolgestellen und/oder in Abhängigkeit der Anzahl der Frequenzwerte, in welche der erste Datenbandbereich 52.1 und/oder der zweite Datenbandbereich 52.2 unterteilt ist/sind, kann eine Vielzahl an zu kommunizierenden Informationsdaten kommuniziert werden. Somit kann eine informationsreiche Kommunikation, insbesondere eine informationsreiche Kommunikation in unkritischen Netzsituation, von mehreren Marktteilnehmern, beispielsweise mehrerer Stromanbieter, mit einer Vielzahl an elektrischen Kontrollvorrichtungen 20, insbesondere bestimmten elektrischen Kontrollvorrichtungen 20 der Vielzahl an elektrischen Kontrollvorrichtungen 20, ermöglicht werden. In Figur 5 ist weiter illustriert, dass das zulässige Frequenzband ferner noch einen ersten Direktsteuerbandbereich 56.1, welcher die Frequenzwerte von 49,00 Hz bis 49,79 Hz aufweist, und einen zweiten Direktsteuerbandbereich 56.2, welcher die Frequenzwerte von 50,21 Hz bis 51,00 Hz aufweist, umfassen kann. Beispielsweise können die Frequenzwerte in dem ersten Direktsteuerbandbereich 56.1 und/oder in dem zweiten Direktsteuerbandbereich 56.2 auch in einem Frequenzschritt von 10 mHz jeweils voneinander beabstandet sein. Der Netzregler 10 kann mittels der Frequenzregeleinheit 12 auch auf diese Frequenzwerte regeln. Wie in Figur 5 dargestellt, ist jeder der Frequenzwerte in dem ersten Direktsteuerbandbereich 56.1 und in dem zweiten Direktsteuerbandbereich 56.2 direkt einem Steuersignal (zu kommunizierender Informationsdaten) zugeordnet, bspw. kann wie in Fig. 5 dem Steuersignal "Wirkleistung elektrischer Lasten auf 50%" (0,5 P_Last%) der Frequenzwert 50,60 zugeordnet sein. Das erfindungsgemäße Verfahren kann als weiteren Schritt das Erkennen der Netzsituation aufweisen, wobei beim Erkennen einer kritischen Netzsituation bzw. in einer kritischen Netzsituation der Netzregler 10 auf Frequenzwerte in dem Direktsteuerbandbereich 56.1 bzw. 56.2 regelt, um der Vielzahl an elektrischen Kontrollvorrichtungen 20 direkt ein Steuersignal zu senden.

In Figur 6 ist beispielhaft eine Frequenzabfolge dargestellt, wobei die Frequenzabfolge ein Startelement 60, ein Gegenstartelement 70, ein Endelement 62 und ein Gegenendelement 72 umfasst. Weiter umfasst die Frequenzabfolge zwischen dem Gegenstartelement 70 und dem Endelement 62 ein Informationselement 64 und ein Gegeninformationselement 74. Jedes der Elemente 60, 70, 64, 74, 62 und 72 ist 4 Vollwellen in einem elektrischen Teilnetz 10 erzeugt. Wie in Figur 6 ersichtlich ist, folgt auf jedes Element 60 bzw. 64 bzw. 62 jeweils direkt das korrespondierende Gegenelement 70 bzw. 74 bzw. 72, wobei jedes der korrespondierenden Gegenelemente 70 bzw. 74 bzw. 72 einen derartigen Gegenfrequenzwert, bezogen auf die Element 60 bzw. 64 bzw. 62 aufweist, sodass die Netzzeit durch die Frequenzabfolge nicht verändert wird. Ist bspw. wie in Fig. 6 der Frequenzwert des Endelements 62 größer als die Netznennfrequenz, so kann dies mit dem Gegenendelement 72 ausgeglichen werden, welches einen korrespondierenden Gegenfrequenzwert aufweist, welcher entsprechend geringer ist als die Netznennfrequenz.

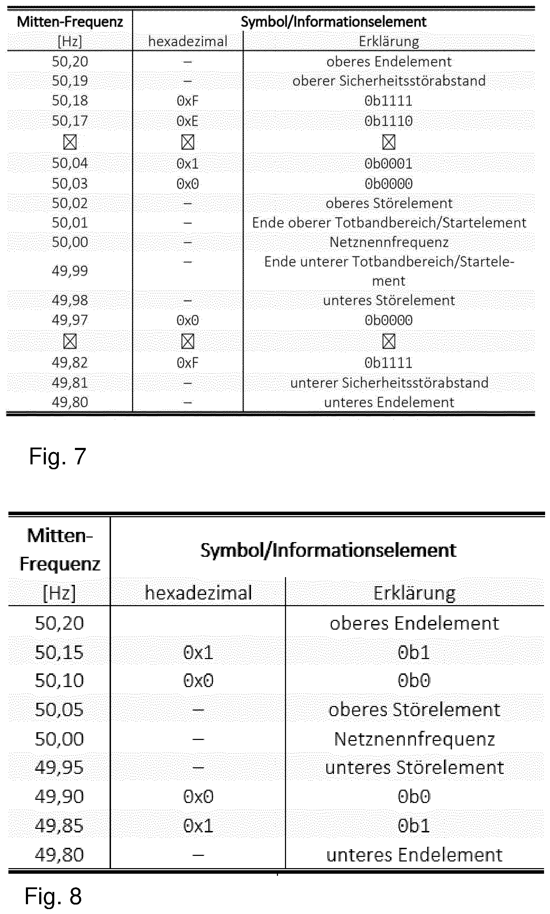

In Figur 7 ist beispielhaft eine Übersetzungstabelle bzw. eine Rückübersetzungstabelle dargestellt, wie sie in einer Übersetzungseinheit 14 eines Netzreglers 10 bzw. in der Rückübersetzungseinheit 24 einer elektrischen Kontrollvorrichtung 20 abgespeichert sein kann. Die Übersetzungseinheit 14 jeweils einem Informationselement (Symbol) einen Frequenzwert (Mitten-Frequenz) zuordnen. Mithilfe der Übersetzungstabelle in der Übersetzungseinheit 14 und der Rückübersetzungstabelle in der Rückübersetzungseinheit 24 können zu kommunizierende Informationsdaten in eine Frequenzabfolge besonders einfach übersetzt werden bzw. die Frequenzabfolge in die zu kommunizierenden Informationsdaten rückübersetzt werden.

In Figur 8 ist beispielhaft eine weitere Übersetzungstabelle bzw. eine weitere Rückübersetzungstabelle dargestellt, wie sie in einer Übersetzungseinheit 14 eines Netzreglers 10 bzw. in der Rückübersetzungseinheit 24 einer elektrischen Kontrollvorrichtung 20 abgespeichert sein kann. Die Übersetzungseinheit 14 kann jeweils einem Informationselement (Symbol) einen Frequenzwert (Mitten-Frequenz) zuordnen. Vorteilhafterweise ist die Frequenzregeleinheit 12 derart ausgebildet, dass diese die Netzfrequenz des elektrischen Teilnetzes auf in einem Frequenzschritt von 50 mHz oder im Wesentlichen in einem Frequenzschritt von 50 mHz jeweils voneinander beabstandete Frequenzwerte regelt. In einem zulässigen Frequenzband liegen ein erster Datenbandbereich 52.1, welcher die Frequenzwerte von 49,80 Hz bis 49,90 Hz aufweist, und ein zweiter Datenbandbereich 52.2, welcher die Frequenzwerte von 50,10 Hz bis 50,20 Hz aufweist. Weiter liegt zwischen dem ersten Datenbandbereich 52.1 und dem zweiten Datenbandbereich 52.2 ein Totbandbereich 54, welcher die Frequenzwerte von 49,95 Hz bis 50,05 Hz und insbesondere die Netznennfrequenz von 50 Hz aufweist. Die zu kommunizierenden Informationsdaten werden mit der Übersetzungstabelle in eine Frequenzabfolge mit den Frequenzwerten 50,10 Hz und 50,15 Hz übersetzt. Ferner können die zu kommunizierenden Informationsdaten zusätzlich in symmetrisch zu der Netznennfrequenz von 50 Hz liegende, zu den Frequenzwerten korrespondierende Gegenfrequenzwerte von 49,90 Hz bzw. 49,85 Hz übersetzt werden, wobei ein Frequenzwert, bspw. 50,10 Hz und ein korrespondierender Gegenfrequenzwert, bspw. 49,90 Hz, das gleiche Informationselement darstellen können bzw. die gleiche Information tragen können. Somit können empfangene, zu kommunizierende Daten auf Integrität geprüft werden. Ferner kann insbesondere mit zumindest einem der beiden Endelemente die Netzzeit des elektrischen Teilnetzes 100 nachgestellt werden.

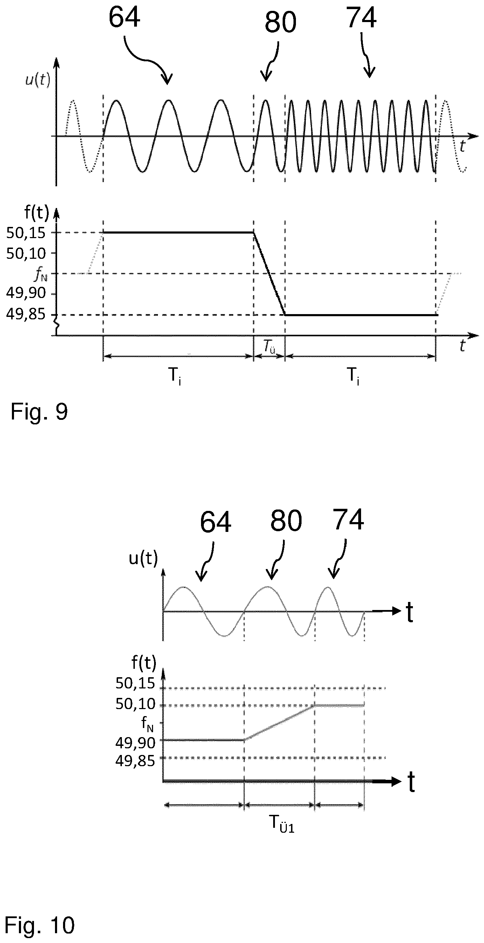

In Figur 9 ist beispielhaft dargestellt wie ein Frequenzwert 50,15 Hz (eines Informationselements 64) und ein zu dem Frequenzwert von 50,15 Hz korrespondierender Gegenfrequenzwert von 49,85 Hz (eines Gegeninformationselements 74) einer Frequenzabfolge jeweils eine bestimmte Zeitdauer Tᵢ in einem elektrischen Teilnetz 100 für die Vielzahl an elektrischen Kontrollvorrichtungen 20 erzeugt wird, wobei die bestimmten Zeitdauern Tᵢ, mit welchen diese zwei Frequenzwerte der Frequenzabfolge in dem elektrischen Teilnetz jeweils erzeugt werden, gleich sind. Ein Sendetakt kann somit insbesondere konstant sein. Weiter ist aus der oberen Abbildung der Figur 9, welche eine elektrische Spannung u(t) des elektrischen Teilnetzes 100 über die Zeit t darstellt, zu entnehmen, dass keine ganzzahligen Vielfache an Vollschwingungen für die Frequenzwerte 50,15 Hz und 49,85 Hz in dem elektrischen Teilnetz 100 erzeugt werden. Mit anderen Worten kann eine Spannungswelle eines Frequenzwertes, wie bspw. hier 50,15 Hz, an einem Übergang 80 "*abgeschnitten*" sein, insbesondere an einem Nicht-Nulldurchgang der einer Spannungswelle an einem Übergang 80 "*abgeschnitten*" sein. In der bestimmten Zeitdauer Tᵢ werden hier abhängig vom Frequenzwert mehr oder weniger Vollwellen erzeugt. In der unteren Abbildung der Figur 9 ist ein zu der oberen Abbildung der Figur 9 korrespondierender Verlauf einer Netzfrequenz f(t) des elektrischen Teilnetzes 100 über die Zeit t dargestellt, wobei nach einer ersten Zeit Tᵢ die Netzfrequenz von dem Frequenzwert 50,15 Hz mittels eines Übergangs 80 auf den korrespondierenden Gegenfrequenzwert 49,85 Hz übergeht.

In Figur 10 ist eine weitere Ausführungsform eines erfindungsgemäßen Verfahrens dargestellt, wobei die Frequenzabfolge in dem elektrischen Teilnetz 100 mittels der Frequenzregeleinheit 12 des Netzreglers 10 zumindest zeitweise derart erzeugt wird, dass ein beispielhafter Übergang 80 von dem Frequenzwert 49,90 Hz (eines Informationselements 64) zum dem Frequenzwert 50,10 Hz (eines Gegeninformationselements 74) in der Frequenzabfolge derart erfolgt, dass ein Phasenwinkel einer elektrischen Spannung u(t) des elektrischen Teilnetzes 100 mit dem Übergang 80 genau einen Vollwinkel oder im Wesentlichen genau einen Vollwinkel von 2 (mal) π erfährt (vgl. obere Abbildung in Figur 10). Somit kann eine Netzzeitbeeinflussung besonders geringgehalten werden. In der unteren Abbildung der Figur 10 ist ein zu der oberen Abbildung der Figur 10 korrespondierender Verlauf der Netzfrequenz f(t) des elektrischen Teilnetzes 100 über die Zeit t dargestellt, wobei die beispielhafte Frequenzänderung von 49,90 Hz auf 50,10 Hz innerhalb einer Übergangszeit von T_{ü1} erfolgt, und wobei hier während des Übergangs 80 zwischen den beiden Frequenzwerten in der Frequenzabfolge eine Frequenzänderungsgeschwindigkeit konstant ist.

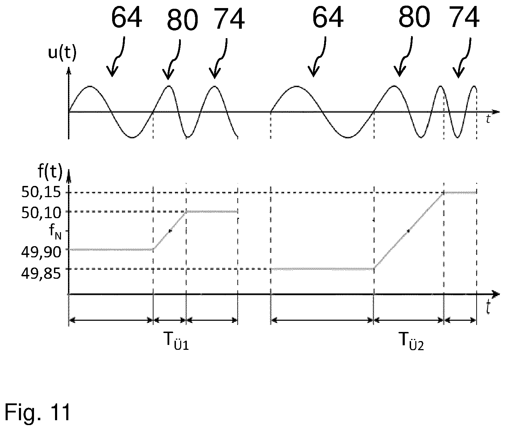

In Figur 11 ist eine weitere Ausführungsform eines erfindungsgemäßen Verfahrens dargestellt, wobei die Frequenzabfolge in dem elektrischen Teilnetz 100 mittels der Frequenzregeleinheit 12 des Netzreglers 10 derart erzeugt wird, dass ein jeweiliger Übergang 80 zwischen Frequenzwerten in der Frequenzabfolge mit einer für die Übergänge 80 gleichen Frequenzänderungsgeschwindigkeit oder mit einer für die Übergänge im Wesentlichen gleichen Frequenzänderungsgeschwindigkeit erfolgt. Beispielhaft ist in den beiden linken Abbildungen der Figur 11 ein Übergang 80 zwischen den beiden Frequenzwerten 49,90 Hz (eines Informationselements 64) und 50,10 Hz (eines Gegeninformationselements 74) der Frequenzabfolge dargestellt, wobei die obere, linke Abbildung eine elektrische Spannung u(t) des elektrischen Teilnetzes 100 über die Zeit t darstellt, und wobei die untere, linke Abbildung einen zu der oberen, linken Abbildung der Figur 11 korrespondierenden Verlauf der Netzfrequenz f(t) des elektrischen Teilnetzes 100 über die Zeit t darstellt. Ferner ist beispielhaft in den beiden rechten Abbildungen der Figur 11 ein weiterer Übergang 80 zwischen den beiden Frequenzwerten 49,85 Hz (eines Informationselements 64) und 50,15 Hz (eines Gegeninformationselements 74) dargestellt, wobei die obere, rechte Abbildung die elektrische Spannung u(t) des elektrischen Teilnetzes 100 über die Zeit t darstellt, und wobei die untere, rechte Abbildung einen zu der oberen, rechten Abbildung der Figur 11 korrespondierenden Verlauf der Netzfrequenz f(t) des elektrischen Teilnetzes 100 über die Zeit t dargestellt. In diesem Beispiel ist die Frequenzänderungsgeschwindigkeit für den Übergang 80 von 49,90 Hz auf 50,10 Hz (linke Abbildungen) und die Frequenzänderungsgeschwindigkeit für den weiteren Übergang 80 von 49,85 Hz auf 50,15 Hz (rechte Abbildungen) gleich oder im Wesentlichen gleich ist. Ferner geht aus Figur 11 hervor, dass die Übergangszeit T_{Ü1} und T_{Ü2} zwischen den Frequenzwerten jedoch abhängig ist vom Betrag der Frequenzänderung von einem Frequenzwert zu einem (direkt) folgenden Frequenzwert. Ferner kann es hier zu Phasenwinkelverschiebungen kommen.

### Bezuaszeichenliste

- 10: Netzregler
- 11: Entkoppeleinheit
- 12: Frequenzregeleinheit
- 14: Übersetzungseinheit
- 16: Informationsdatenempfangsschnittstelle
- 17: Kontrollvorrichtungsdatenempfangsschnittstelle
- 18: Kontrollvorrichtungsdatenauswerteeinheit

- 20: elektrische Kontrollvorrichtung
- 22: Empfangseinheit
- 24: Rückübersetzungseinheit
- 26: Auswerteeinheit
- 28: Regel-/Steuereinheit
- 29: Sendeschnittstelle

- 50: Frequenzband
- 52: Datenbandbereich
- 54: Totbandbereich
- 56: Direktsteuerbandbereich

- 60: Startelement
- 62: Endelement
- 64: Informationselement

- 70: Gegenstartelement
- 72: Gegenendelement
- 74: Gegeninformationselement

- 80: Übergang
- 100: elektrisches Teilnetz
- 102: elektrischer Netzteilnehmer

- 200: System

- 300: Übersetzen von zu kommunizierenden Informationsdaten in Frequenzabfolge
- 302: Erzeugen der Frequenzabfolge
- 304: Übertragen der Frequenzabfolge
- 306: Empfangen der Frequenzabfolge
- 308: Rückübersetzen der Frequenzabfolge in die zu kommunizierenden Informationsdaten
- 310: Auswerten der zu kommunizierenden Informationsdaten
- 312: Regeln und/oder Steuern eines elektrischen Netzteilnehmers

- Tᵢ: Zeitdauer
- T_{Ü1}: Übergangszeit
- T_{Ü2}: Übergangszeit

## Patentansprüche

1. Verfahren für eine Kommunikation zwischen einem Netzregler (10) und einer Vielzahl an elektrischen Kontrollvorrichtungen (20) eines elektrischen Teilnetzes (100), wobei der Netzregler (10) dazu ausgebildet ist, mittels einer Frequenzregeleinheit (12) eine Netzfrequenz des elektrischen Teilnetzes (100) auf Frequenzwerte innerhalb eines Frequenzbandes (50) des elektrischen Teilnetzes (100) zu regeln, wobei das Verfahren zum Kommunizieren die folgenden Schritte aufweist:
a) Übersetzen (300) von zu kommunizierenden Informationsdaten in eine Frequenzabfolge mit wenigstens zwei Frequenzwerten mittels einer Übersetzungseinheit (14) des Netzreglers (10),
b) Erzeugen (302) der Frequenzabfolge in dem elektrischen Teilnetz (100) für die Vielzahl an elektrischen Kontrollvorrichtungen (20) des elektrischen Teilnetzes (100) mittels der Frequenzregeleinheit (12) des Netzreglers (10),
c) Übertragen (304) der Frequenzabfolge mittels des elektrischen Teilnetzes (100) an die Vielzahl an elektrischen Kontrollvorrichtungen (20),
d) Empfangen (306) der Frequenzabfolge von einer jeweiligen Empfangseinheit (22) der Vielzahl an elektrischen Kontrollvorrichtungen (20),
e) Rückübersetzen (308) der Frequenzabfolge in die zu kommunizierenden Informationsdaten mittels einer jeweiligen Rückübersetzungseinheit (24) der Vielzahl an elektrischen Kontrollvorrichtungen (20),
f) Auswerten (310) der zu kommunizierenden Informationsdaten mittels einer jeweiligen Auswerteeinheit (26) der Vielzahl an elektrischen Kontrollvorrichtungen (20),
**dadurch gekennzeichnet,**
**dass** die zu kommunizierenden Informationsdaten zusätzlich in wenigstens zwei zu den wenigstens zwei Frequenzwerten korrespondierende Gegenfrequenzwerte übersetzt werden (300), wobei die Frequenzabfolge die wenigstens zwei korrespondierenden Gegenfrequenzwerte aufweist.

2. Verfahren nach Anspruch 1,
**dadurch gekennzeichnet,**
**dass** das Verfahren weiter folgenden Schritt g) aufweist:
Regeln und/oder Steuern (312) eines mit der jeweiligen elektrischen Kontrollvorrichtung verbundenen elektrischen Netzteilnehmers (102) auf Basis der ausgewerteten Informationsdaten mittels einer jeweiligen Regel-/Steuereinheit (28) der jeweiligen elektrischen Kontrollvorrichtung (20), wobei insbesondere der elektrische Netzteilnehmer (102) ein elektrischer Verbraucher, ein elektrischen Energieerzeuger und/oder ein elektrischer Speicher ist.

3. Verfahren nach einem der vorangegangenen Ansprüche,
**dadurch gekennzeichnet,**
**dass** die Frequenzabfolge ein Startelement (60) zum Kennzeichnen des Anfangs der Frequenzabfolge aufweist und/oder dass die Frequenzabfolge ein Endelement (62) zum Kennzeichnen des Endes der Frequenzabfolge aufweist und/oder dass die Frequenzabfolge ein Adresselement zum Adressieren von wenigstens einer elektrischen Kontrollvorrichtung (20) von der Vielzahl an elektrischen Kontrollvorrichtungen (20) aufweist.

4. Verfahren nach einem der vorangegangenen Ansprüche,
**dadurch gekennzeichnet,**
**dass** die Frequenzabfolge wenigstens ein Sicherheitsstörelement zum Berücksichtigen unbeabsichtigter Netzfrequenzschwankungen aufweist.

5. Verfahren nach einem der vorangegangenen Ansprüche,
**dadurch gekennzeichnet,**
**dass** zumindest einer der Frequenzwerte der Frequenzabfolge wenigstens eine Vollwelle lang, bevorzugterweise zwei Vollwellen lang und ganz bevorzugterweise vier Vollwellen lang in dem elektrischen Teilnetz (100) für die Vielzahl an elektrischen Kontrollvorrichtungen (20) erzeugt wird.

6. Verfahren nach einem der vorangegangenen Ansprüche,
**dadurch gekennzeichnet,**
**dass** die wenigstens zwei Frequenzwerte der Frequenzabfolge jeweils eine bestimmte Zeitdauer (Tᵢ) oder im Wesentlichen eine bestimmte Zeitdauer (Tᵢ) in dem elektrischen Teilnetz (100) für die Vielzahl an elektrischen Kontrollvorrichtungen (20) erzeugt (302) werden, wobei insbesondere die jeweils bestimmten Zeitdauern (Tᵢ), mit welchen die wenigstens zwei Frequenzwerte der Frequenzabfolge in dem elektrischen Teilnetz (100) erzeugt (302) werden, gleich sind.

7. Verfahren nach einem der vorangegangenen Ansprüche,
**dadurch gekennzeichnet,**
**dass** die Frequenzabfolge in dem elektrischen Teilnetz (100) mittels der Frequenzregeleinheit (12) des Netzreglers (10) zumindest zeitweise derart erzeugt (302) wird, dass ein jeweiliger Übergang (80) zwischen Frequenzwerten in der Frequenzabfolge derart erfolgt, dass ein Phasenwinkel mit dem Übergang (80) ein ganzzahliges Vielfaches eines Vollwinkels oder im Wesentlichen ein ganzzahliges Vielfaches eines Vollwinkels, vorzugsweise dass ein Phasenwinkel genau einen Vollwinkel oder im Wesentlichen genau einen Vollwinkel, erfährt.

8. Verfahren nach einem der vorangegangenen Ansprüche,
**dadurch gekennzeichnet,**
**dass** die Frequenzabfolge in dem elektrischen Teilnetz (100) mittels der Frequenzregeleinheit (12) des Netzreglers (10) zumindest zeitweise derart erzeugt (302) wird, dass ein jeweiliger Übergang (80) zwischen Frequenzwerten in der Frequenzabfolge mit einer für die Übergänge (80) gleichen Frequenzänderungsgeschwindigkeit oder mit einer für die Übergänge (80) im Wesentlichen gleichen Frequenzänderungsgeschwindigkeit erfolgt.

9. Verfahren nach einem der vorangegangenen Ansprüche,
**dadurch gekennzeichnet,**
**dass** das Frequenzband (50) des elektrischen Teilnetzes (100) wenigstens einen Datenbandbereich (52) für die Kommunikation der Informationsdaten, wobei die Frequenzabfolge in dem wenigstens einen Datenbandbereich (52) des Frequenzbandes (50) liegt, umfasst.

10. Verfahren nach einem der vorangegangenen Ansprüche,
**dadurch gekennzeichnet,**
**dass** das Frequenzband (50) des elektrischen Teilnetzes (100) einen ersten Datenbandbereich (52), einen zweiten Datenbandbereich (52) und wenigstens einen Totbandbereich (54) umfasst, wobei in dem ersten Datenbandbereich (52) und/oder in dem zweiten Datenbandbereich (52) die Frequenzabfolge liegt, und wobei insbesondere der wenigstens eine Totbandbereich (54) zwischen dem ersten Datenbandbereich (52) und dem zweiten Datenbandbereich (52) liegt.

11. Verfahren nach einem der vorangegangenen Ansprüche,
**dadurch gekennzeichnet,**
**dass** die Frequenzabfolge ein zu dem Startelement (60) korrespondierendes Gegenstartelement (70) und/oder ein zu dem Endelement (62) korrespondierendes Gegenendelement (72) und/oder ein zu dem Adresselement korrespondierendes Gegenadresselement und/oder ein zu dem wenigstens einen Sicherheitsstörelement korrespondierendes Gegensicherheitsstörelement aufweist.

12. Netzregler (10) für ein Verfahren nach einem der vorangegangenen Ansprüche, wobei das Verfahren für eine Kommunikation zwischen einem Netzregler (10) und einer Vielzahl an elektrischen Kontrollvorrichtungen (20) eines elektrischen Teilnetzes (100) ist, und wobei der Netzregler (10) umfasst:
- eine Übersetzungseinheit (14) zum Übersetzen (300) von zu kommunizierenden Informationsdaten in eine Frequenzabfolge mit wenigstens zwei Frequenzwerten,
- eine Frequenzregeleinheit (12) zum Regeln einer Netzfrequenz eines elektrischen Teilnetzes (100) auf Frequenzwerte innerhalb eines Frequenzbandes (50) des elektrischen Teilnetzes (100).

13. Netzregler (10) nach Anspruch 12,
**dadurch gekennzeichnet,**
**dass** der Netzregler (10) eine Entkoppeleinheit (11) zum Entkoppeln elektrischer Qualitätsmerkmale des elektrischen Teilnetzes (100) von elektrischen Qualitätsmerkmalen eines elektrischen Gesamtnetzes aufweist, wobei das elektrische Gesamtnetz das elektrische Teilnetz (100) umfasst.

14. Netzregler (10) nach Anspruch 12 oder 13,
**dadurch gekennzeichnet,**
**dass** der Netzregler (10) ferner eine Informationsdatenempfangsschnittstelle (16) zum Empfangen von den zu kommunizierenden Informationsdaten aufweist.

15. Netzregler (10) nach Anspruch 12 bis 14,
**dadurch gekennzeichnet,**
**dass** der Netzregler (10) ferner eine Kontrollvorrichtungsdatenempfangsschnittstelle (17) zum Empfangen von Kontrollvorrichtungsdaten von der Vielzahl an elektrischen Kontrollvorrichtungen (20) des elektrischen Teilnetzes (100) aufweist.

16. Netzregler (10) nach einem der Ansprüche 12 bis 15,
**dadurch gekennzeichnet,**
**dass** der Netzregler (10) ferner eine Kontrollvorrichtungsdatenauswerteeinheit (18) zum Auswerten von empfangenen Kontrollvorrichtungsdaten aufweist.

17. Elektrische Kontrollvorrichtung (20) für ein Verfahren nach einem der Ansprüche 1 bis 11, wobei das Verfahren für eine Kommunikation zwischen einem Netzregler (10) und einer Vielzahl an elektrischen Kontrollvorrichtungen (20) eines elektrischen Teilnetzes (100) ist, und wobei die elektrische Kontrollvorrichtung (20) umfasst:
- eine Empfangseinheit (22) zum Empfangen (306) einer Frequenzabfolge,
- eine Rückübersetzungseinheit (24) zum Rückübersetzen (308) der Frequenzabfolge in zu kommunizierende Informationsdaten,
- eine Auswerteeinheit (26) zum Auswerten (310) der zu kommunizierenden Informationsdaten.

18. Elektrische Kontrollvorrichtung (20) nach Anspruch 17,
**dadurch gekennzeichnet,**
**dass** die elektrische Kontrollvorrichtung (20) eine Regel-/Steuereinheit (28) zum Regeln und/oder Steuern 312 eines mit der elektrischen Kontrollvorrichtung (20) verbundenen elektrischen Netzteilnehmers (102) auf Basis der ausgewerteten Informationsdaten aufweist.

19. Elektrische Kontrollvorrichtung (20) nach Anspruch 17 oder 18,
**dadurch gekennzeichnet,**
**dass** die elektrische Kontrollvorrichtung (20) eine Sendeschnittstelle (29) zum Senden von Kontrollvorrichtungsdaten, insbesondere über wenigstens ein Übertragungsmedium, aufweist.

20. System (200), wobei das System (200) aufweist:
- ein elektrisches Teilnetz (100) zum Übertragen (304) einer Frequenzabfolge,
- zumindest einen Netzregler (10) nach einem der Ansprüche 12 bis 16, wobei der Netzregler (10) über das elektrische Teilnetz (100) mit zumindest einer erfindungsgemäßen elektrischen Kontrollverbindung (20) elektrisch verbunden ist,
- die zumindest eine elektrische Kontrollvorrichtung (20), wobei die zumindest eine elektrische Kontrollvorrichtung (20) nach einem der Ansprüche 17 bis 19 ausgebildet ist.

## Claims

1. A method for communication between a network controller (10) and a plurality of electrical control devices (20) of an electrical subnetwork (100), wherein the network controller (10) is adapted to control, by means of a frequency control unit (12), a network frequency of the electrical subnetwork (100) to frequency values within a frequency band (50) of the electrical subnetwork (100), the method for communicating comprising the steps of:
a) translating (300) information data to be communicated into a frequency sequence with at least two frequency values by means of a translation unit (14) of the network controller (10),
b) generating (302) the frequency sequence in the electrical subnetwork (100) for the plurality of electrical control devices (20) of the electrical subnetwork (100) by means of the frequency control unit (12) of the network controller (10),
c) transmitting (304) the frequency sequence by means of the electrical subnetwork (100) to the plurality of electrical control devices (20),
d) receiving (306) the frequency sequence from a respective receiving unit (22) of the plurality of electrical control devices (20),
e) retranslating (308) the frequency sequence into the information data to be communicated by means of a respective retranslation unit (24) of the plurality of electrical control devices (20),
f) evaluating (310) the information data to be communicated by means of a respective evaluation unit (26) of the plurality of electrical control devices (20),
**characterized in that**
the information data to be communicated are additionally translated (300) into at least two counter-frequency values corresponding to the at least two frequency values, the frequency sequence having the at least two corresponding counter-frequency values.

2. The method according to claim 1,
**characterized in that,**
the method further comprises the following step g):
regulating and/or controlling (312) an electrical network subscriber (102) connected to the respective electrical control device on the basis of the evaluated information data by means of a respective regulating/control unit (28) of the respective electrical control device (20), wherein in particular the electrical network subscriber (102) is an electrical consumer, an electrical energy generator and/or an electrical storage device.

3. The method according to any one of the preceding claims,
**characterized in that**
the frequency sequence comprises a start element (60) for identifying the start of the frequency sequence and/or that the frequency sequence comprises an end element (62) for identifying the end of the frequency sequence and/or that the frequency sequence comprises an address element for addressing at least one electrical control device (20) of the plurality of electrical control devices (20).

4. The method according to any one of the preceding claims,
**characterized in that**
the frequency sequence has at least one safety interference element for taking account of unintentional mains frequency fluctuations.

5. The method according to any one of the preceding claims,
**characterized in that**
at least one of the frequency values of the frequency sequence is generated at least one full wave long, more preferably two full waves long and most preferably four full waves long in the electrical subnetwork (100) for the plurality of electrical control devices (20).

6. The method according to any one of the preceding claims,
**characterized in that**
the at least two frequency values of the frequency sequence each have a specific time duration (Tᵢ) or substantially a certain time duration (Tᵢ) is generated (302) in the electrical subnetwork (100) for the plurality of electrical control devices (20), wherein in particular the respective determined time durations (Tᵢ) with which the at least two frequency values of the frequency sequence are generated (302) in the electrical subnetwork (100) are equal.

7. The method according to any one of the preceding claims,
**characterized in that**
the frequency sequence in the electrical subnetwork (100) is generated (302) at least at times by means of the frequency control unit (12) of the network controller (10) in such a way that a respective transition (80) between frequency values in the frequency sequence takes place in such a way that a phase angle with the transition (80) experiences an integral multiple of a full angle or essentially an integral multiple of a full angle, preferably that a phase angle experiences exactly a full angle or essentially exactly a full angle.

8. The method according to any one of the preceding claims,
**characterized in that**
the frequency sequence in the electrical subnetwork (100) is generated (302) by means of the frequency control unit (12) of the network controller (10) at least at times in such a way that a respective transition (80) between frequency values in the frequency sequence takes place at a frequency change rate which is the same for the transitions (80) or at a frequency change rate which is essentially the same for the transitions (80).

9. The method according to any one of the preceding claims,
**characterized in that**
the frequency band (50) of the electrical subnetwork (100) comprises at least one data band (52) for the communication of the information data, wherein the frequency sequence lies in the at least one data band (52) of the frequency band (50).

10. The method according to any one of the preceding claims,
**characterized in that**
the frequency band (50) of the electrical subnetwork (100) comprises a first data band region (52), a second data band region (52) and at least one deadband region (54), the frequency sequence being located in the first data band region (52) and/or in the second data band region (52), and in particular the at least one deadband region (54) being located between the first data band region (52) and the second data band region (52).

11. The method according to any one of the preceding claims,
**characterized in that**
the frequency sequence has a counter-start element (70) corresponding to the start element (60) and/or a counter-end element (72) corresponding to the end element (62) and/or a counter-address element corresponding to the address element and/or a counter-safety interference element corresponding to the at least one safety interference element.

12. A network controller (10) for a method according to any one of the preceding claims, wherein the method is for communication between a network controller (10) and a plurality of electrical control devices (20) of an electrical subnetwork (100), and wherein the network controller (10) comprises:
- a translation unit (14) for translating (300) information data to be communicated into a frequency sequence having at least two frequency values,
- a frequency control unit (12) for controlling a power frequency of an electrical subnetwork (100) to frequency values within a frequency band (50) of the electrical subnetwork (100).

13. A network controller (10) according to claim 12,
**characterized in that**
the network controller (10) has a decoupling unit (11) for decoupling electrical quality characteristics of the electrical subnetwork (100) from electrical quality characteristics of an overall electrical network, the overall electrical network comprising the electrical subnetwork (100).

14. A network controller (10) according to claim 12 or 13,
**characterized in that**
the network controller (10) further comprises an information data receiving interface (16) for receiving the information data to be communicated.

15. A network controller (10) according to claim 12 to 14,
**characterized in that**
the network controller (10) further comprises a control device data receiving interface (17) for receiving control device data from the plurality of electrical control devices (20) of the electrical subnetwork (100).

16. A network controller (10) according to any one of claims 12 to 15,
**characterized in that**
the network controller (10) further comprises a control device data evaluation unit (18) for evaluating received control device data.

17. An electrical control device (20) for a method according to any one of claims 1 to 11, wherein the method is for communication between a network controller (10) and a plurality of electrical control devices (20) of an electrical subnetwork (100), and wherein the electrical control device (20) comprises:
- a receiving unit (22) for receiving (306) a frequency sequence,
- a back translation unit (24) for back translating (308) the frequency sequence into information data to be communicated,
- an evaluation unit (26) for evaluating (310) the information data to be communicated.

18. Electrical control device (20) according to claim 17,
**characterized in that**
the electrical control device (20) comprises a regulating/control unit (28) for regulating and/or controlling (312) an electrical network subscriber (102) connected to the electrical control device (20) on the basis of the evaluated information data.

19. Electrical control device (20) according to claim 17 or 18,
**characterized in that**
the electrical control device (20) has a transmission interface (29) for transmitting control device data, in particular via at least one transmission medium.

20. A system (200), the system (200) comprising:
- an electrical subnetwork (100) for transmitting (304) a frequency sequence,
- at least one network controller (10) according to any one of claims 12 to 16, wherein the network controller (10) is electrically connected via the electrical subnetwork (100) to at least one electrical control device (20) according to the invention,
- the at least one electrical control device (20), wherein the at least one electrical control device (20) is formed according to any one of claims 17 to 19.

## Revendications

1. Procédé pour une communication entre un régulateur de réseau (10) et une pluralité de dispositifs de contrôle électriques (20) d'un sous-réseau électrique (100), le régulateur de réseau (10) étant conçu pour réguler, au moyen d'une unité de régulation de fréquence (12), une fréquence de réseau du sous-réseau électrique (100) à des valeurs de fréquence à l'intérieur d'une bande de fréquence (50) du sous-réseau électrique (100), le procédé pour la communication comprenant les étapes suivantes :
a) traduire (300) des données d'information à communiquer en une séquence de fréquences avec au moins deux valeurs de fréquence au moyen d'une unité de traduction (14) du régulateur de réseau (10),
b) générer (302) la séquence de fréquences dans le sous-réseau électrique (100) pour la pluralité de dispositifs de contrôle électriques (20) du sous-réseau électrique (100) au moyen de l'unité de régulation de fréquence (12) du régulateur de réseau (10),
c) transmettre (304) la séquence de fréquences au moyen du sous-réseau électrique (100) à la pluralité de dispositifs de contrôle électrique (20),
d) la réception (306) de la séquence de fréquences à partir d'une unité de réception respective (22) de la pluralité de dispositifs de contrôle électrique (20),
e) la traduction inverse (308) de la séquence de fréquences en les données d'information à communiquer au moyen d'une unité de traduction inverse respective (24) de la pluralité de dispositifs de contrôle électrique (20),
f) évaluer (310) les données d'information à communiquer au moyen d'une unité d'évaluation respective (26) de la pluralité de dispositifs de contrôle électrique (20),
**caractérisé en ce que**
les données d'information à communiquer sont en outre traduites (300) en au moins deux valeurs de fréquence opposée correspondant aux au moins deux valeurs de fréquence, la séquence de fréquence présentant les au moins deux valeurs de fréquence opposée correspondantes.

2. Procédé selon la revendication 1,
**caractérisé en ce que,**
le procédé comprend en outre l'étape g) suivante :
régulation et/ou commande (312) d'un participant électrique au réseau (102) relié au dispositif de contrôle électrique respectif sur la base des données d'information évaluées au moyen d'une unité de régulation/commande (28) respective du dispositif de contrôle électrique (20) respectif, le participant électrique au réseau (102) étant notamment un consommateur électrique, un générateur d'énergie électrique et/ou un accumulateur électrique.

3. Procédé selon l'une quelconque des revendications précédentes,
**caractérisé en ce que**
la séquence de fréquence comprend un élément de début (60) pour identifier le début de la séquence de fréquence et/ou **en ce que** la séquence de fréquence comprend un élément de fin (62) pour identifier la fin de la séquence de fréquence et/ou **en ce que** la séquence de fréquence comprend un élément d'adresse pour adresser au moins un dispositif de contrôle électrique (20) parmi la pluralité de dispositifs de contrôle électrique (20).

4. Procédé selon l'une quelconque des revendications précédentes,
**caractérisé en ce que**
la séquence de fréquences présente au moins un élément perturbateur de sécurité pour prendre en compte des variations involontaires de la fréquence du réseau.

5. Procédé selon l'une quelconque des revendications précédentes,
**caractérisé en ce qu'**
au moins l'une des valeurs de fréquence de la séquence de fréquence est générée au moins une onde complète de longue durée, de préférence deux ondes complètes de longue durée et de manière tout à fait préférée quatre ondes complètes de longue durée dans le sous-réseau électrique (100) pour la pluralité de dispositifs de contrôle électrique (20).

6. Procédé selon l'une quelconque des revendications précédentes,
**caractérisé en ce que**
les au moins deux valeurs de fréquence de la séquence de fréquence ont chacune une durée déterminée (Tᵢ) ou essentiellement une durée déterminée (Tᵢ) sont générées (302) dans le sous-réseau électrique (100) pour la pluralité de dispositifs de contrôle électriques (20), en particulier les durées déterminées respectives (Tᵢ) avec lesquelles les au moins deux valeurs de fréquence de la séquence de fréquence sont générées (302) dans le sous-réseau électrique (100) sont égales.

7. Procédé selon l'une quelconque des revendications précédentes,
**caractérisé en ce que**
la séquence de fréquences dans le sous-réseau électrique (100) est produite (302) au moyen de l'unité de régulation de fréquence (12) du régulateur de réseau (10) au moins par moments de telle sorte qu'une transition respective (80) entre des valeurs de fréquence dans la séquence de fréquences a lieu de telle sorte qu'un angle de phase avec la transition (80) subit un multiple entier d'un angle plein ou essentiellement un multiple entier d'un angle plein, de préférence qu'un angle de phase subit exactement un angle plein ou essentiellement exactement un angle plein.

8. Procédé selon l'une quelconque des revendications précédentes,
**caractérisé en ce que**
la séquence de fréquences dans le sous-réseau électrique (100) est générée (302) au moins temporairement au moyen de l'unité de régulation de fréquence (12) du régulateur de réseau (10) de telle sorte qu'une transition respective (80) entre des valeurs de fréquence dans la séquence de fréquences s'effectue avec une vitesse de variation de fréquence identique pour les transitions (80) ou avec une vitesse de variation de fréquence sensiblement identique pour les transitions (80).

9. Procédé selon l'une quelconque des revendications précédentes,
**caractérisé en ce que**
la bande de fréquence (50) du sous-réseau électrique (100) comprend au moins une zone de bande de données (52) pour la communication des données d'information, la séquence de fréquences se trouvant dans l'au moins une zone de bande de données (52) de la bande de fréquence (50).

10. Procédé selon l'une quelconque des revendications précédentes,
**caractérisé en ce que**
la bande de fréquence (50) du sous-réseau électrique (100) comprend une première zone de bande de données (52), une deuxième zone de bande de données (52) et au moins une zone de bande morte (54), la séquence de fréquences se trouvant dans la première zone de bande de données (52) et/ou dans la deuxième zone de bande de données (52), et l'au moins une zone de bande morte (54) se trouvant notamment entre la première zone de bande de données (52) et la deuxième zone de bande de données (52).

11. Procédé selon l'une quelconque des revendications précédentes,
**caractérisé en ce que**
la séquence de fréquences présente un élément de contre-départ (70) correspondant à l'élément de départ (60) et/ou un élément de contre-fin (72) correspondant à l'élément d'extrémité (62) et/ou un élément de contreadresse correspondant à l'élément d'adresse et/ou un élément de contre-fin de sécurité correspondant à l'au moins un élément perturbateur de sécurité.

12. Régulateur de réseau (10) pour un procédé selon l'une quelconque des revendications précédentes, dans lequel le procédé est pour une communication entre un régulateur de réseau (10) et une pluralité de dispositifs de contrôle électrique (20) d'un sous-réseau électrique (100), et dans lequel le régulateur de réseau (10) comprend :
- une unité de traduction (14) pour traduire (300) des données d'information à communiquer en une séquence de fréquences ayant au moins deux valeurs de fréquence,
- une unité de régulation de fréquence (12) pour réguler une fréquence de réseau d'un sous-réseau électrique (100) sur des valeurs de fréquence à l'intérieur d'une bande de fréquence (50) du sous-réseau électrique (100).

13. Régulateur de réseau (10) selon la revendication 12,
**caractérisé en ce que**
le régulateur de réseau (10) présente une unité de découplage (11) pour découpler des caractéristiques de qualité électriques du sous-réseau électrique (100) de caractéristiques de qualité électriques d'un réseau électrique global, le réseau électrique global comprenant le sous-réseau électrique (100).

14. Régulateur de réseau (10) selon la revendication 12 ou 13,
**caractérisé en ce que**
le régulateur de réseau (10) présente en outre une interface de réception de données d'information (16) pour recevoir les données d'information à communiquer.

15. Régulateur de réseau (10) selon les revendications 12 à 14,
**caractérisé en ce que**
le régulateur de réseau (10) comprend en outre une interface de réception de données de dispositif de contrôle (17) pour recevoir des données de dispositif de contrôle de la pluralité de dispositifs de contrôle électriques (20) du sous-réseau électrique (100).

16. Régulateur de réseau (10) selon l'une des revendications 12 à 15,
**caractérisé en ce que**
le régulateur de réseau (10) présente en outre une unité d'évaluation de données de dispositif de contrôle (18) pour évaluer des données de dispositif de contrôle reçues.

17. Dispositif de contrôle électrique (20) pour un procédé selon l'une quelconque des revendications 1 à 11, dans lequel le procédé est pour une communication entre un contrôleur de réseau (10) et une pluralité de dispositifs de contrôle électrique (20) d'un sous-réseau électrique (100), et dans lequel le dispositif de contrôle électrique (20) comprend :
- une unité de réception (22) pour recevoir (306) une séquence de fréquences,
- une unité de retraduction (24) pour retraduire (308) la séquence de fréquences en données d'information à communiquer,
- une unité d'évaluation (26) pour évaluer (310) les données d'information à communiquer.

18. Dispositif de contrôle électrique (20) selon la revendication 17,
**caractérisé en ce que**
le dispositif de contrôle électrique (20) présente une unité de régulation/commande (28) pour la régulation et/ou la commande (312) d'un participant au réseau électrique (102) relié au dispositif de contrôle électrique (20) sur la base des données d'information évaluées.

19. Dispositif de contrôle électrique (20) selon la revendication 17 ou 18,
**caractérisé en ce que**
le dispositif de contrôle électrique (20) présente une interface d'émission (29) pour l'émission de données de dispositif de contrôle, en particulier via au moins un support de transmission.

20. Système (200), le système (200) comprenant
- un sous-réseau électrique (100) pour transmettre (304) une séquence de fréquences,
- au moins un régulateur de réseau (10) selon l'une des revendications 12 à 16, le régulateur de réseau (10) étant relié électriquement par le sous-réseau électrique (100) à au moins une liaison de contrôle électrique (20) selon l'invention,
- l'au moins un dispositif de contrôle électrique (20), l'au moins un dispositif de contrôle électrique (20) étant réalisé selon l'une des revendications 17 à 19.
